# EUROPEAN PATENT APPLICATION

(11) **EP 4 408 072 A1**
(43) Date of publication of application: **31.07.2024**
(21) Application number: 22886173.8
(22) Date of filing: 01.11.2022
(51) Int. Cl.: H04W 36/08, H04W 76/28

(54) **COMMUNICATION METHOD AND APPARATUS**

(30) Priority: 01.11.2021 CN 202111285067
(71) Applicant: Huawei Technologies Co., Ltd., Shenzhen, Guangdong 518129 (CN)
(72) Inventor: XIE, Xi, Shenzhen, Guangdong 518129 (CN); CHANG, Junren, Shenzhen, Guangdong 518129 (CN); LI, Jiaojiao, Shenzhen, Guangdong 518129 (CN); YU, Zheng, Shenzhen, Guangdong 518129 (CN); HAN, Feng, Shenzhen, Guangdong 518129 (CN); CHEN, Lei, Shenzhen, Guangdong 518129 (CN)
(74) Representative: MERH-IP Matias Erny Reichl Hoffmann Patentanwälte PartG mbB
(86) International application number: PCT/CN2022/128939
(87) International publication number: WO 2023/072298

(57) **Abstract**

This application provides a communication method and apparatus to improve communication performance of a novel terminal device. The method includes: receiving a first message from a source access network device, and determining a capability of a first cell based on the first message, where the first message indicates to hand over a first terminal device to the first cell, the first cell corresponds to a target access network device, and the capability of the first cell is whether the first cell supports serving a terminal device with a reduced capability; and determining, based on the capability of the first cell, whether to access the first cell. In this way, the terminal device can be prevented from being handed over to a cell that does not support serving this type of terminal device. Therefore, mobility performance of the terminal device can be enhanced, service performance of the terminal device can be improved, and further, communication performance of the terminal device can be improved.

## Description

### CROSS-REFERENCE TO RELATED APPLICATIONS

This application claims priority to Chinese Patent Application No. 202111285067.0, filed with the China National Intellectual Property Administration on November 1, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, a terminal device in a connected state may access a more suitable serving cell through a handover procedure, to ensure service continuity of the terminal device.

The handover procedure is performed based on a measurement result reported by the terminal device. A serving cell may configure the terminal device to measure the serving cell and neighboring cells. The terminal device performs measurement to obtain a measurement result and reports the measurement result to the serving cell. The serving cell determines, based on the measurement result of the terminal device, whether to hand over the terminal device, and determines a target cell for handover when handover is required. For example, when quality of a current serving cell is poor or quality of a neighboring cell is better than quality of a current serving cell to some extent, the serving cell may trigger handover of the terminal device to the neighboring cell with better quality.

Currently, a novel terminal device, for example, a terminal device with a reduced capability (RedCap UE), is introduced in a new radio (new radio, NR) system. For the RedCap UE, an access network device needs to provide an additional configuration. If a current handover procedure is used, the RedCap UE may be handed over to an NR access network device that does not support serving the RedCap UE, and the NR access network device that does not support serving the RedCap UE may not normally serve the RedCap UE. For example, because the access network device does not know an accurate capability of the terminal device, the access network device may provide, for the terminal device, a configuration that does not match the capability of the terminal device (for example, a bandwidth configured for the terminal device for use exceeds a maximum bandwidth that can be supported by the terminal device). As a result, the RedCap UE cannot operate normally.

Therefore, how to improve communication performance of the novel terminal device is an urgent technical problem to be resolved.

### SUMMARY

This application provides a communication method and apparatus to improve communication performance of a novel terminal device.

According to a first aspect, this application provides a communication method. The method may be performed by a terminal device, or may be performed by a chip or a circuit in a terminal device. The method includes: receiving a first message from a first access network device, and determining a capability of a first cell based on the first message, where the first message indicates to hand over a first terminal device to the first cell, the first cell corresponds to a second access network device, the capability of the first cell is whether the first cell supports serving a first type of terminal device, the first terminal device belongs to the first type of terminal device, and the first type of terminal device is a terminal device with a reduced capability; and determining, based on the capability of the first cell, whether to access the first cell.

In an embodiment of this application, the terminal device may determine, based on the first message, whether a target access network device supports serving a corresponding type of terminal device, so that a subsequent operation of the handover can be determined in time. In this way, the terminal device can be prevented from being handed over to a cell that does not support serving this type of terminal device. Therefore, mobility performance of the terminal device can be enhanced, and service performance of the terminal device can be improved. This helps reduce communication interruption of the terminal device and improve communication performance of the terminal device.

In a possible design, the terminal device with the reduced capability may reduce at least one of the following: a maximum bandwidth capability, a quantity of transmit and receive antennas or antenna channels, maximum uplink transmit power, a carrier aggregation capability, a frequency division duplex capability, a data processing capability, an uplink transmission peak rate and/or a downlink transmission peak rate, a maximum multiple-input multiple-output layer quantity capability, and a dual-connectivity capability.

In a possible design, the terminal device with the reduced capability may alternatively be a terminal device with a later protocol version. For example, a protocol version of the terminal device with the reduced capability may be NR Rel-17 or later.

In a possible design, the first type of terminal device may alternatively be an enhanced mobile broadband (enhanced Mobile Broadband, eMBB) terminal device, an ultra-reliable and low latency communication (ultra-reliable and low latency communication, URLLC) terminal device, an uncrewed aerial vehicle, an X-reality (X reality, XR) device (such as a virtual reality (virtual reality, VR) device, a mobile application augmented reality (augmented reality, AR) device, or a mixed reality (mixed reality, MR) device), another Internet of Things (Internet of Things, IoT) device, a positioning device, or the like.

In a possible design, the determining a capability of a first cell based on the first message includes: if the first message carries first information, determining that the first cell supports serving the first type of terminal device; or if the first message does not carry first information, determining that the first cell does not support serving the first type of terminal device, where the first information indicates that the first cell supports serving the first type of terminal device.

In the foregoing design, the access network device that supports serving the first type of terminal device sends the first information to the terminal device through a source access network device in a handover procedure, so that the terminal device can determine whether the target access network device supports serving the first type of terminal device, thereby avoiding handover to an access network device that does not support serving the first type of terminal device.

In a possible design, the first information is information specific to the first type of terminal device, for example, information specific to the first type of terminal device and broadcast by the target access network device based on system information. In this design, the first message carries the information specific to the first type of terminal device and coming from the target access network device, to implicitly indicate a capability of the target access network device. Therefore, on one hand, the terminal device can determine the capability of the target access network device, and on the other hand, the terminal device can obtain, in advance, the information specific to the first type of terminal device and broadcast by the target access network device, thereby improving communication performance.

In a possible design, the information specific to the first type of terminal device includes at least one of the following: an intra-frequency reselection indication corresponding to the first type of terminal device; a cell bar indication corresponding to the first type of terminal device; and resource configuration information corresponding to the first type of terminal device.

In a possible design, the determining, based on the capability of the first cell, whether to access the first cell includes: if the first cell supports serving the first type of terminal device, accessing the first cell; or if the first cell does not support serving the first type of terminal device, performing a radio resource control (radio resource control, RRC) connection re-establishment procedure, or establishing an RRC connection to a second cell, where an access network device corresponding to the second cell is different from the access network device corresponding to the first cell, or entering an RRC idle state.

In the foregoing design, the terminal device may access another access network device in time when the target access network device does not support serving the corresponding type of terminal device. Therefore, mobility performance of the terminal device can be enhanced, and service performance of the terminal device can be improved.

According to a second aspect, this application provides a communication method. The method may be performed by an access network device, or may be performed by a chip or a circuit in an access network device. The method includes: receiving a handover request message from a first access network device; and sending a handover response message to the first access network device, where if a second access network device supports serving a first type of terminal device, the handover response message carries first information, or if a second access network device does not support serving a first type of terminal device, the handover response message does not carry first information, where the first information indicates that the second access network device supports serving the first type of terminal device.

In an embodiment of this application, a target access network device sends the first information to the terminal device through a source access network device in a handover procedure, so that the terminal device can determine, based on whether the first information is received, whether the target access network device supports serving a corresponding type of terminal device, so that a subsequent operation of the handover can be determined in time. In this way, the terminal device can be prevented from being handed over to a cell that does not support serving this type of terminal device. Therefore, mobility performance of the terminal device can be enhanced, and service performance of the terminal device can be improved. This helps reduce communication interruption of the terminal device and improve communication performance of the terminal device.

In a possible design, the first type of terminal device is a terminal device with a reduced capability.

In a possible design, the terminal device with the reduced capability may reduce at least one of the following: a maximum bandwidth capability, a quantity of transmit and receive antennas or antenna channels, maximum uplink transmit power, a carrier aggregation capability, a frequency division duplex capability, a data processing capability, an uplink transmission peak rate and/or a downlink transmission peak rate, a maximum multiple-input multiple-output layer quantity capability, and a dual-connectivity capability.

In a possible design, the terminal device with the reduced capability may alternatively be a terminal device with a later protocol version. For example, a protocol version of the terminal device with the reduced capability may be NR Rel-17 or later.

In a possible design, the first type of terminal device may alternatively be an eMBB terminal device, a URLLC terminal device, an uncrewed aerial vehicle, an XR device (such as a VR device, an AR device, or an MR device), another IoT device, a positioning device, or the like.

In a possible design, the first information is information specific to the first type of terminal device, for example, information specific to the first type of terminal device and broadcast by the target access network device based on system information. In this design, the first message carries the information specific to the first type of terminal device and coming from the target access network device, to implicitly indicate a capability of the target access network device. Therefore, on one hand, the terminal device can determine the capability of the target access network device, and on the other hand, the terminal device can obtain, in advance, the information specific to the first type of terminal device and broadcast by the target access network device, thereby improving communication performance.

In a possible design, the information specific to the first type of terminal device includes at least one of the following: an intra-frequency reselection indication corresponding to the first type of terminal device; a cell bar indication corresponding to the first type of terminal device; and resource configuration information corresponding to the first type of terminal device.

In a possible design, before sending the first information to the first access network device, the method further includes: determining that a first terminal device is the first type of terminal device; or determining that a first terminal device is the first type of terminal device and that a radio access technology standard supported by the first access network device is LTE. In the foregoing design, the access network device sends the first information in a scenario in which the first terminal device is the first type of terminal device or the like, so that signaling overheads of the access network device can be reduced and that power consumption of the access network device can be reduced.

In a possible design, before sending the first information to the first access network device, the method further includes: determining that a first terminal device is the first type of terminal device and that a radio access technology standard supported by the first access network device is higher than LTE. Based on the foregoing design, signaling overheads of the access network device can be reduced, and power consumption of the access network device can be reduced.

According to a third aspect, this application provides a communication method. The method may be performed by a terminal device, or may be performed by a chip or a circuit in a terminal device. The method includes: determining, based on system information of a first cell, that the first cell does not support serving a first type of terminal device, where a first terminal device belongs to the first type of terminal device; and performing an RRC connection re-establishment procedure, or establishing an RRC connection to a second cell, where the first cell and the second cell correspond to different access network devices, or entering an idle state.

In an embodiment of this application, the terminal device determines, based on the system information, whether the cell or an access network device supports serving a corresponding type of terminal device. If the cell or the access network device does not support serving the corresponding type of terminal device, the terminal device can find, in time by using the foregoing method, that the terminal device accesses an unsuitable cell, so that a serving cell or a serving access network device can be changed in time. In comparison with finding that a terminal device is handed over to an unsuitable cell due to a scheduling or transmission problem when a service is performed, in this embodiment of this application, handover of the terminal device to an unsuitable cell can be found before a service is performed or before a problem occurs. Therefore, mobility performance of the terminal device can be enhanced, and service performance of the terminal device can be improved. This helps reduce communication interruption of the terminal device and improve communication performance of the terminal device.

In a possible design, before the determining, based on system information of a first cell, that the first cell does not support serving a first type of terminal device, the method further includes: being handed over from a third cell to the first cell, where the third cell and the first cell correspond to different access network devices. Based on the foregoing design, after being handed over to a target cell, the terminal device can determine, in time based on system information of the target cell, that the terminal device is handed over to an unsuitable cell, so that the terminal device can access another access network device or enter the idle state in time.

In a possible design, the determining, based on system information of a first cell, that the first cell does not support serving a first type of terminal device includes: if the system information includes first information, determining that the first cell supports serving the first type of terminal device; or if the system information does not include first information, determining that the first cell does not support serving the first type of terminal device, where the first information is information specific to the first type of terminal device, for example, information specific to the first type of terminal device and broadcast by a target access network device based on system information.

If the access network device broadcasts information specific to the first terminal device in the system information, it indicates that the access network device supports serving the first type of terminal device. Therefore, accuracy of determining a capability of the access network device by the terminal device can be improved in the foregoing manner.

In a possible design, the information specific to the first type of terminal device includes at least one of the following: an intra-frequency reselection indication corresponding to the first type of terminal device; a cell bar indication corresponding to the first type of terminal device; and resource configuration information corresponding to the first type of terminal device.

In a possible design, the first type of terminal device is a terminal device with a reduced capability.

In a possible design, the terminal device with the reduced capability may reduce at least one of the following: a maximum bandwidth capability, a quantity of transmit and receive antennas or antenna channels, maximum uplink transmit power, a carrier aggregation capability, a frequency division duplex capability, a data processing capability, an uplink transmission peak rate and/or a downlink transmission peak rate, a maximum multiple-input multiple-output layer quantity capability, and a dual-connectivity capability.

In a possible design, the terminal device with the reduced capability may alternatively be a terminal device with a later protocol version. For example, a protocol version of the terminal device with the reduced capability may be NR Rel-17 or later.

In a possible design, the first type of terminal device may alternatively be an eMBB terminal device, a URLLC terminal device, an uncrewed aerial vehicle, an XR device (such as a VR device, an AR device, or an MR device), another IoT device, a positioning device, or the like.

According to a fourth aspect, this application provides a communication method. The method may be performed by a terminal device, or may be performed by a chip or a circuit in a terminal device. The method includes: receiving measurement configuration information, where the measurement configuration information indicates to measure a first cell; and determining a measurement operation based on a capability of the first cell, where the capability of the first cell is whether the first cell supports serving a first type of terminal device, and a first terminal device belongs to the first type of terminal device.

In an embodiment of this application, a measurement reporting process is controlled by determining the measurement operation based on the capability of the first cell, so that a probability that a source access network device selects a cell that does not support serving a corresponding type of terminal device as a handover target can be reduced. Therefore, mobility performance of the terminal device can be enhanced, and service performance of the terminal device can be improved. This helps reduce communication interruption of the terminal device and improve communication performance of the terminal device.

In a possible design, the first type of terminal device is a terminal device with a reduced capability.

In a possible design, the terminal device with the reduced capability may reduce at least one of the following: a maximum bandwidth capability, a quantity of transmit and receive antennas or antenna channels, maximum uplink transmit power, a carrier aggregation capability, a frequency division duplex capability, a data processing capability, an uplink transmission peak rate and/or a downlink transmission peak rate, a maximum multiple-input multiple-output layer quantity capability, and a dual-connectivity capability.

In a possible design, the terminal device with the reduced capability may alternatively be a terminal device with a later protocol version. For example, a protocol version of the terminal device with the reduced capability may be NR Rel-17 or later.

In a possible design, the first type of terminal device may alternatively be an eMBB terminal device, a URLLC terminal device, an uncrewed aerial vehicle, an XR device (such as a VR device, an AR device, or an MR device), another IoT device, a positioning device, or the like.

In a possible design, the determining a measurement operation based on a capability of the first cell includes: determining that the first cell supports serving the first type of terminal device; and measuring the first cell. In the foregoing design, the terminal device performs cell measurement when the cell supports serving the corresponding type of terminal device.

In a possible design, the determining a measurement operation based on a capability of the first cell includes: determining that the first cell does not support serving the first type of terminal device; and skipping measuring the first cell, and/or skipping reporting a measurement result of the first cell.

Based on the foregoing design, a measurement result reported to the source access network device does not include a measurement result of the cell that does not support serving the corresponding type of terminal device. Therefore, the probability that the source access network device selects the cell that does not support serving the corresponding type of terminal device can be reduced, mobility performance of the terminal device can be enhanced, and service performance of the terminal device can be improved. In addition, in the foregoing manner, a measurement operation on the cell that does not support serving the corresponding type of service can be avoided, some unnecessary measurement overheads of the terminal device can be reduced, and additional power consumption of the terminal device can be reduced.

In a possible design, the method further includes: determining the capability of the first cell based on stored information, where the stored information includes: information about a cell that supports serving the first type of terminal device, and/or information about a cell that does not support serving the first type of terminal device. The foregoing design provides a method for obtaining a capability of a cell, so that the terminal device can determine the capability of the cell and perform a measurement operation based on the capability of the cell.

In a possible design, the method further includes: determining the capability of the first cell based on system information of the first cell. The foregoing design provides a method for obtaining a capability of a cell, so that the terminal device can determine the capability of the cell and perform a measurement operation based on the capability of the cell.

In a possible design, the determining the capability of the first cell based on system information of the first cell includes: if the system information includes first information, determining that the first cell supports serving the first type of terminal device; or if the system information does not include first information, determining that the first cell does not support serving the first type of terminal device, where the first information is information specific to the first type of terminal device, for example, information specific to the first type of terminal device and broadcast by a target access network device based on system information.

If the access network device broadcasts information specific to the first terminal device in the system information, it indicates that the access network device supports serving the first type of terminal device. Therefore, accuracy of determining a capability of the access network device by the terminal device can be improved in the foregoing manner.

In a possible design, the information specific to the first type of terminal device includes at least one of the following: an intra-frequency reselection indication corresponding to the first type of terminal device; a cell bar indication corresponding to the first type of terminal device; and resource configuration information corresponding to the first type of terminal device.

In a possible design, the first type of terminal device is a terminal device with a reduced capability.

In a possible design, the terminal device with the reduced capability may reduce at least one of the following: a maximum bandwidth capability, a quantity of transmit and receive antennas or antenna channels, maximum uplink transmit power, a carrier aggregation capability, a frequency division duplex capability, a data processing capability, an uplink transmission peak rate and/or a downlink transmission peak rate, a maximum multiple-input multiple-output layer quantity capability, and a dual-connectivity capability.

In a possible design, the terminal device with the reduced capability may alternatively be a terminal device with a later protocol version. For example, a protocol version of the terminal device with the reduced capability may be NR Rel-17 or later.

In a possible design, the first type of terminal device may alternatively be an eMBB terminal device, a URLLC terminal device, an uncrewed aerial vehicle, an XR device (such as a VR device, an AR device, or an MR device), another IoT device, a positioning device, or the like.

According to a fifth aspect, this application provides a communication method. The method may be performed by an access network device, or may be performed by a chip or a circuit in an access network devi ce. The method includes: sending a handover request message to a second access network device, where a first terminal device belongs to a first type of terminal device; receiving a handover response message from the second access network device; determining a capability of the second access network device based on the handover response message, where the capability of the second access network device is whether the second access network device supports serving the first type of terminal device; and determining, based on the capability of the second access network device, whether to hand over the first terminal device to the second access network device.

In an embodiment of this application, a source access network device may determine, based on the handover response message, whether a target access network device supports serving a corresponding type of terminal device, so that a subsequent operation of the handover can be determined in time. In this way, the terminal device can be prevented from being handed over to a cell that does not support serving this type of terminal device. Therefore, mobility performance of the terminal device can be enhanced, and service performance of the terminal device can be improved. This helps reduce communication interruption of the terminal device and improve communication performance of the terminal device.

In a possible design, the first type of terminal device is a terminal device with a reduced capability.

In a possible design, the terminal device with the reduced capability may reduce at least one of the following: a maximum bandwidth capability, a quantity of transmit and receive antennas or antenna channels, maximum uplink transmit power, a carrier aggregation capability, a frequency division duplex capability, a data processing capability, an uplink transmission peak rate and/or a downlink transmission peak rate, a maximum multiple-input multiple-output layer quantity capability, and a dual-connectivity capability.

In a possible design, the terminal device with the reduced capability may alternatively be a terminal device with a later protocol version. For example, a protocol version of the terminal device with the reduced capability may be NR Rel-17 or later.

In a possible design, the first type of terminal device may alternatively be an eMBB terminal device, a URLLC terminal device, an uncrewed aerial vehicle, an XR device (such as a VR device, an AR device, or an MR device), another IoT device, a positioning device, or the like.

In a possible design, the determining a capability of the second access network device includes: if the handover response message carries first information, determining that the second access network device supports serving the first type of terminal device; or if the handover response message does not carry first information, determining that the second access network device does not support serving the first type of terminal device, where the first information indicates that the second access network device supports serving the first type of terminal device.

In the foregoing design, the access network device that supports serving the first type of terminal device sends the first information to the source access network device in a handover procedure, so that the source access network device can determine whether the target access network device supports serving the first type of terminal device, thereby avoiding handover to an access network device that does not support serving the first type of terminal device.

In a possible design, the first information is information specific to the first type of terminal device, for example, information specific to the first type of terminal device and broadcast by the target access network device based on system information. In this design, the first message carries the information specific to the first type of terminal device and coming from the target access network device, to implicitly indicate a capability of the target access network device. Therefore, on one hand, the terminal device can determine the capability of the target access network device, and on the other hand, the terminal device can obtain, in advance, the information specific to the first type of terminal device and broadcast by the target access network device, thereby improving communication performance.

In a possible design, the information specific to the first type of terminal device includes at least one of the following: an intra-frequency reselection indication corresponding to the first type of terminal device; a cell bar indication corresponding to the first type of terminal device; and resource configuration information corresponding to the first type of terminal device.

In a possible design, the determining, based on the capability of the second access network device, whether to hand over the first terminal device to the second access network device includes: if the second access network device supports serving the first type of terminal device, handing over the first terminal device to the second access network device; or if the second access network device does not support serving the first type of terminal device, selecting a third access network device as a target access network device.

In the foregoing design, the source access network device may hand over the terminal device to another access network device in time when the target access network device does not support serving the corresponding type of terminal device. Therefore, mobility performance of the terminal device can be enhanced, and service performance of the terminal device can be improved.

According to a sixth aspect, this application provides a communication method. The method may be performed by a core network device, or may be performed by a chip or a circuit in a core network device. The method includes: receiving a handover request message from a first access network device, where the handover request message is used to request to hand over a first terminal device to a second access network device, and the first terminal device belongs to a first type of terminal device; and determining, based on a capability of the second access network device, whether to perform the handover, where the capability of the second access network device is whether the second access network device supports serving the first type of terminal device.

In an embodiment of this application, the core network device controls a handover procedure based on a capability of a target access network device, so that the terminal device can be prevented from being handed over to a cell that does not support this type of terminal device. Therefore, mobility performance of the terminal device can be enhanced, and service performance of the terminal device can be improved. This helps reduce communication interruption of the terminal device and improve communication performance of the terminal device.

In a possible design, if the first access network device and the second access network device are connected to different core network devices, the receiving a handover request message from a first access network device includes: receiving the handover request message forwarded by a core network device connected to the first access network device.

In a possible design, the determining, based on a capability of the second access network device, whether to perform the handover includes: if the second access network device does not support serving the first type of terminal device, sending a notification message to the first access network device, where the notification message is used to notify that the handover fails, or that the handover is not performed, or that the handover is suspended/stopped, or that the handover is rejected; or if the second access network device supports serving the first type of terminal device, sending a handover request message to the second access network device. Based on the foregoing design, the terminal device can be prevented from being handed over to a cell that does not support this type of terminal device. Therefore, mobility performance of the terminal device can be enhanced, and service performance of the terminal device can be improved.

In a possible design, the notification message carries a first cause value, and the first cause value indicates that a cause of the handover failure is that the second access network device does not support serving the first type of terminal device. The foregoing design facilitates network planning.

According to a seventh aspect, this application provides a communication method. The method may be performed by a terminal device, or may be performed by a chip or a circuit in a terminal device. The method includes: receiving configuration information from an access network device; and performing reception and/or sending based on the configuration information, where the configuration information is used to configure a discontinuous reception (discontinuous reception, DRX) mechanism, and the configuration information meets at least one of the following: a configured DRX cycle is greater than or equal to a first value; a configured DRX inactivity timer, DRX on duration timer, or DRX retransmission timer is less than or equal to a second value; configured DRX inactive duration is greater than or equal to a third value; and configured DRX active duration is less than or equal to a fourth value, where the first value, the second value, the third value, and the fourth value are related to a time required by a first terminal device to obtain a cell global identifier (cell global identifier, CGI).

In an embodiment of this application, the DRX inactive duration can be increased by restricting the DRX configuration. Therefore, it can be ensured to some extent that a terminal device with a low processing capability has sufficient time to obtain a CGI, so that the CGI can be reported. Therefore, after obtaining the CGI, the access network device can perform network planning or network optimization. This helps improve communication performance of the terminal device.

In a possible design, the DRX cycle includes a long DRX cycle and/or a short DRX cycle.

According to an eighth aspect, this application provides a communication method. The method may be performed by an access network device, or may be performed by a chip or a circuit in an access network device. The method includes: determining configuration information, where the configuration information is used to configure DRX; and sending the configuration information to a first terminal device, where the configuration information meets at least one of the following: a configured DRX cycle is greater than or equal to a first value; a configured DRX inactivity timer, DRX on duration timer, or DRX retransmission timer is less than or equal to a second value; configured DRX inactive duration is greater than or equal to a third value; and configured DRX active duration is less than or equal to a fourth value, where the first value, the second value, the third value, and the fourth value are related to a time required by the first terminal device to obtain a CGI.

In an embodiment of this application, the DRX active duration of the terminal device can be indirectly reduced by restricting a quantity of times that the network device schedules the terminal device to transmit data. Therefore, the DRX inactive duration can be increased, and it can be further ensured to some extent that a terminal device with a low processing capability has sufficient time to obtain a CGI.

In a possible design, the DRX cycle includes a long DRX cycle and/or a short DRX cycle.

According to a ninth aspect, this application provides a communication method. The method may be performed by an access network device, or may be performed by a chip or a circuit in an access network device. The method includes: determining scheduling information, where the scheduling information is used to schedule a first terminal device to receive and/or send data; and sending the scheduling information to the first terminal device, where a quantity of times that the terminal device is scheduled to receive and/or send data in a first time unit is less than or equal to a fifth value, and the fifth value is related to a time required by the first terminal device to obtain a CGI.

In an embodiment of this application, DRX active duration of the terminal device can be indirectly reduced by restricting a quantity of times that the network device schedules the terminal device to transmit data. Therefore, DRX inactive duration can be increased, and it can be further ensured to some extent that a terminal device with a low processing capability has sufficient time to obtain a CGI, so that the CGI can be reported. Therefore, after obtaining the CGI, the access network device can perform network planning or network optimization. This helps improve communication performance of the terminal device.

According to a tenth aspect, this application provides a communication method. The method may be performed by a terminal device, or may be performed by a chip or a circuit in a terminal device. The method includes: relaxing radio link monitoring (radio link monitoring, RLM) measurement and/or beam failure detection (beam failure detection, BFD) measurement; determining that a radio link failure (radio link failure, RLF) and/or a beam failure (beam failure, BF) occur/occurs; and sending RLM information and/or BFD information to an access network device, where the RLM information indicates that the RLF occurs when the terminal device relaxes the RLM measurement, and the BFD information may be used to indicate that the BF occurs when the terminal device relaxes the BFD measurement.

In an embodiment of this application, when the terminal device relaxes the RLM measurement and/or the BFD measurement, the terminal device reports the RLM information and/or the BFD information to the access network device when the RLF and/or the BF occur/occurs, so that the access network device can adjust, based on a status of the terminal device, a policy for relaxing the RLM measurement and/or the BFD measurement by the terminal device. Therefore, a failure probability of the terminal device during measurement relaxation is reduced as much as possible, and this helps improve communication performance of the terminal device.

In a possible design, the relaxing RLM measurement and/or BFD measurement includes: increasing a measurement period of the RLM measurement and/or the BFD measurement, increasing an indication period and/or a reporting period of the RLM measurement and/or the BFD measurement, or reducing a quantity of reference signal s of the RLM measurement and/or the BFD measurement, or the like.

According to an eleventh aspect, this application further provides a communication apparatus. The communication apparatus has functions for implementing any method provided in the first aspect, the third aspect, the fourth aspect, the seventh aspect, or the tenth aspect. The communication apparatus may be implemented by hardware, or may be implemented by hardware by executing corresponding software. The hardware or the software includes one or more units or modules corresponding to the foregoing functions.

In a possible design, the communication apparatus includes a processor. The processor is configured to support the communication apparatus in performing corresponding functions of the network device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a terminal device.

For example, the communication apparatus has functions for implementing the method provided in the first aspect. The processor may be configured to: receive a first message from a first access network device through the interface circuit, determine a capability of a first cell based on the first message, and determine, based on the capability of the first cell, whether to access the first cell.

For another example, the communication apparatus has functions for implementing the method provided in the third aspect. The processor may be configured to: determine, based on system information of a first cell, that the first cell does not support serving a first type of terminal device, where a first terminal device belongs to the first type of terminal device; and perform an RRC connection re-establishment procedure, or establish an RRC connection to a second cell, where the first cell and the second cell correspond to different access network devices, or enter an idle state.

For another example, the communication apparatus has functions for implementing the method provided in the fourth aspect. The processor may be configured to: receive measurement configuration information through the interface circuit, where the measurement configuration information indicates to measure a first cell; and determine a measurement operation based on a capability of the first cell, where the capability of the first cell is whether the first cell supports serving a first type of terminal device, and a first terminal device belongs to the first type of terminal device.

For another example, the communication apparatus has functions for implementing the method provided in the seventh aspect. The processor may be configured to: receive configuration information from an access network device through the interface circuit, and perform downlink reception based on the configuration information, where the configuration information is used to configure a DRX mechanism, and the configuration information meets at least one of the following: a configured DRX cycle is greater than or equal to a first value; a configured DRX inactivity timer, DRX on duration timer, or DRX retransmission timer is less than or equal to a second value; configured DRX inactive duration is greater than or equal to a third value; and configured DRX active duration is less than or equal to a fourth value, where the first value, the second value, the third value, and the fourth value are related to a time required by a first terminal device to obtain a CGI.

For another example, the communication apparatus has functions for implementing the method provided in the seventh aspect. The processor may be configured to: relax RLM measurement and/or BFD measurement; determine that an RLF and/or BF occur/occurs; and send RLM information and/or BFD information to an access network device through the interface circuit, where the RLM information indicates that the RLF occurs when the terminal device relaxes the RLM measurement, and the BFD information may be used to indicate that the BF occurs when the terminal device relaxes the BFD measurement.

In a possible design, the communication apparatus includes corresponding functional modules for respectively implementing the steps in the foregoing method. The functions may be implemented by hardware, or may be implemented by hardware by executing corresponding software. The hardware or software includes one or more modules corresponding to the foregoing functions.

In a possible design, a structure of the communication apparatus includes a processing unit (or a processing module) and a communication unit (or a communication module). These units may perform corresponding functions in the foregoing method examples. For details, refer to the descriptions in the method provided in the first aspect, the third aspect, the fourth aspect, the seventh aspect, or the tenth aspect. Details are not described herein again.

For example, the communication apparatus has functions for implementing the method provided in the first aspect. The communication unit may be configured to communicate with the terminal device. The processing unit may be configured to: receive a first message from a first access network device by using the communication unit, determine a capability of a first cell based on the first message, and determine, based on the capability of the first cell, whether to access the first cell.

For another example, the communication apparatus has functions for implementing the method provided in the third aspect. The processing unit may be configured to: determine, based on system information of a first cell, that the first cell does not support serving a first type of terminal device, where a first terminal device belongs to the first type of terminal device; and perform an RRC connection re-establishment procedure, or establish an RRC connection to a second cell, where the first cell and the second cell correspond to different access network devices, or enter an idle state.

For another example, the communication apparatus has functions for implementing the method provided in the fourth aspect. The communication unit may be configured to communicate with the terminal device. The processing unit may be configured to: receive measurement configuration information by using the communication unit, where the measurement configuration information indicates to measure a first cell; and determine a measurement operation based on a capability of the first cell, where the capability of the first cell is whether the first cell supports serving a first type of terminal device, and a first terminal device belongs to the first type of terminal device.

For another example, the communication apparatus has functions for implementing the method provided in the seventh aspect. The processing unit may be configured to: receive configuration information from an access network device by using the communication unit, and perform downlink reception based on the configuration information, where the configuration information is used to configure a DRX mechanism, and the configuration information meets at least one of the following: a configured DRX cycle is greater than or equal to a first value; a configured DRX inactivity timer, DRX on duration timer, or DRX retransmission timer is less than or equal to a second value; configured DRX inactive duration is greater than or equal to a third value; and configured DRX active duration is less than or equal to a fourth value, where the first value, the second value, the third value, and the fourth value are related to a time required by a first terminal device to obtain a CGI.

For another example, the communication apparatus has functions for implementing the method provided in the tenth aspect. The processing unit may be configured to: relax RLM measurement and/or BFD measurement; determine that an RLF and/or BF occur/occurs; and send RLM information and/or BFD information to the access network device by using the communication unit, where the RLM information indicates that the RLF occurs when the terminal device relaxes the RLM measurement, and the BFD information may be used to indicate that the BF occurs when the terminal device relaxes the BFD measurement.

According to a twelfth aspect, this application further provides a communication apparatus. The communication apparatus has functions for implementing any method provided in the second aspect, the fifth aspect, the eighth aspect, or the ninth aspect. The communication apparatus may be implemented by hardware, or may be implemented by hardware by executing corresponding software. The hardware or the software includes one or more units or modules corresponding to the foregoing functions.

In a possible design, the communication apparatus includes a processor. The processor is configured to support the communication apparatus in performing corresponding functions of the terminal device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a network device.

For example, the communication apparatus has functions for implementing the method provided in the second aspect. The processor may be configured to: receive a handover request message from a first access network device through the interface circuit; and send a handover response message to the first access network device through the interface circuit, where if a second access network device supports serving a first type of terminal device, the handover response message carries first information, or if a second access network device does not support serving a first type of terminal device, the handover response message does not carry first information, where the first information indicates that the second access network device supports serving the first type of terminal device.

For example, the communication apparatus has functions for implementing the method provided in the fifth aspect. The processor may be configured to: send a handover request message to a second access network device through the interface circuit, where a first terminal device belongs to a first type of terminal device; receive a handover response message from the second access network device through the interface circuit; determine a capability of the second access network device based on the handover response message, where the capability of the second access network device is whether the second access network device supports serving the first type of terminal device; and determine, based on the capability of the second access network device, whether to hand over the first terminal device to the second access network device.

For example, the communication apparatus has functions for implementing the method provided in the eighth aspect. The processor may be configured to: determine configuration information, where the configuration information is used to configure DRX; and send the configuration information to a first terminal device through the interface circuit, where the configuration information meets at least one of the following: a configured DRX cycle is greater than or equal to a first value; a configured DRX inactivity timer, DRX on duration timer, or DRX retransmission timer is less than or equal to a second value; configured DRX inactive duration is greater than or equal to a third value; and configured DRX active duration is less than or equal to a fourth value, where the first value, the second value, the third value, and the fourth value are related to a time required by the first terminal device to obtain a CGI.

For example, the communication apparatus has functions for implementing the method provided in the ninth aspect. The processor may be configured to: determine scheduling information, where the scheduling information is used to schedule a first terminal device to receive and/or send data; and send the scheduling information to the first terminal device through the interface circuit, where a quantity of times that the terminal device is scheduled to receive and/or send data in a first time unit is less than or equal to a fifth value, and the fifth value is related to a time required by the first terminal device to obtain a CGI.

In a possible design, the communication apparatus includes corresponding functional modules for respectively implementing the steps in the foregoing method. The functions may be implemented by hardware, or may be implemented by hardware by executing corresponding software. The hardware or software includes one or more modules corresponding to the foregoing functions.

In a possible design, a structure of the communication apparatus includes a processing unit (or a processing module) and a communication unit (or a processing unit). These units may perform corresponding functions in the foregoing method examples. For details, refer to the descriptions in the method provided in the second aspect, the fifth aspect, the eighth aspect, or the ninth aspect. Details are not described herein again.

For example, the communication apparatus has functions for implementing the method provided in the second aspect. The communication unit is configured to communicate with the network device. The processing unit may be configured to: receive a handover request message from a first access network device by using the communication unit; and send a handover response message to the first access network device by using the communication unit, where if a second access network device supports serving a first type of terminal device, the handover response message carries first information, or if a second access network device does not support serving a first type of terminal device, the handover response message does not carry first information, where the first information indicates that the second access network device supports serving the first type of terminal device.

For example, the communication apparatus has functions for implementing the method provided in the fifth aspect. The processing unit may be configured to: send a handover request message to a second access network device by using the communication unit, where a first terminal device belongs to a first type of terminal device; receive a handover response message from the second access network device by using the communication unit; determine a capability of the second access network device based on the handover response message, where the capability of the second access network device is whether the second access network device supports serving the first type of terminal device; and determine, based on the capability of the second access network device, whether to hand over the first terminal device to the second access network device.

For example, the communication apparatus has functions for implementing the method provided in the eighth aspect. The communication unit is configured to communicate with the network device. The processing unit may be configured to: determine configuration information, where the configuration information is used to configure DRX; and send the configuration information to a first terminal device by using the communication unit, where the configuration information meets at least one of the following: a configured DRX cycle is greater than or equal to a first value; a configured DRX inactivity timer, DRX on duration timer, or DRX retransmission timer is less than or equal to a second value; configured DRX inactive duration is greater than or equal to a third value; and configured DRX active duration is less than or equal to a fourth value, where the first value, the second value, the third value, and the fourth value are related to a time required by the first terminal device to obtain a CGI.

For example, the communication apparatus has functions for implementing the method provided in the ninth aspect. The communication unit is configured to communicate with the network device. The processing unit may be configured to: determine scheduling information, where the scheduling information is used to schedule a first terminal device to receive and/or send data; and send the scheduling information to the first terminal device by using the communication unit, where a quantity of times that the terminal device is scheduled to receive and/or send data in a first time unit is less than or equal to a fifth value, and the fifth value is related to a time required by the first terminal device to obtain a CGI.

According to a thirteenth aspect, this application further provides a communication apparatus. The communication apparatus has functions for implementing any method provided in the sixth aspect. The communication apparatus may be implemented by hardware, or may be implemented by hardware by executing corresponding software. The hardware or the software includes one or more units or modules corresponding to the foregoing functions.

In a possible design, the communication apparatus includes a processor. The processor is configured to support the communication apparatus in performing corresponding functions of the network device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a terminal device.

For example, the communication apparatus has functions for implementing the method provided in the sixth aspect. The processor may be configured to: receive a handover request message from a first access network device through the interface circuit, where the handover request message is used to request to hand over a first terminal device to a second access network device, and the first terminal device belongs to a first type of terminal device; and determine, based on a capability of the second access network device, whether to perform the handover, where the capability of the second access network device is whether the second access network device supports serving the first type of terminal device.

In a possible design, the communication apparatus includes corresponding functional modules for respectively implementing the steps in the foregoing method. The functions may be implemented by hardware, or may be implemented by hardware by executing corresponding software. The hardware or software includes one or more modules corresponding to the foregoing functions.

In a possible design, a structure of the communication apparatus includes a processing unit (or a processing module) and a communication unit (or a communication module). These units may perform corresponding functions in the foregoing method examples. For details, refer to the descriptions in the method provided in the sixth aspect. Details are not described herein again.

For example, the communication apparatus has functions for implementing the method provided in the sixth aspect. The communication unit may be configured to communicate with a terminal device. The processing unit may be configured to: receive a handover request message from a first access network device by using the communication unit, where the handover request message is used to request to hand over a first terminal device to a second access network device, and the first terminal device belongs to a first type of terminal device; and determine, based on a capability of the second access network device, whether to perform the handover, where the capability of the second access network device is whether the second access network device supports serving the first type of terminal device.

According to a fourteenth aspect, a communication apparatus is provided. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method in the first aspect, the third aspect, the fourth aspect, the seventh aspect, or the tenth aspect and any possible design thereof through a logic circuit or by executing code instructions.

According to a fifteenth aspect, a communication apparatus is provided. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method in the second aspect, the fifth aspect, the eighth aspect, or the ninth aspect and any possible design thereof through a logic circuit or by executing code instructions.

According to a sixteenth aspect, a communication apparatus is provided. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method in the sixth aspect and any possible design thereof through a logic circuit or by executing code instructions.

According to a seventeenth aspect, a computer-readable storage medium is provided. The computer-readable storage medium stores a computer program or instructions. When the computer program or instructions are executed by a processor, the method in any one of the first aspect to the tenth aspect and any possible design thereof is implemented.

According to an eighteenth aspect, a computer program product storing instructions is provided. When the instructions are run by a processor, the method in any one of the first aspect to the tenth aspect and any possible design thereof is implemented.

According to a nineteenth aspect, a system-on-chip is provided. The system-on-chip includes a processor, and may further include a memory. The system-on-chip is configured to implement the method in any one of the first aspect to the tenth aspect and any possible design thereof. The system-on-chip may include a chip, or may include a chip and another discrete component.

According to a twentieth aspect, a communication system is provided, where the system includes the apparatus according to the first aspect and the apparatus according to the second aspect.

According to a twenty-first aspect, a communication system is provided, where the system includes the apparatus according to the third aspect and an access network device.

According to a twenty-second aspect, a communication system is provided, where the system includes the apparatus according to the fourth aspect and an access network device.

According to a twenty-third aspect, a communication system is provided, where the system includes the apparatus according to the fifth aspect and the apparatus according to the second aspect.

According to a twenty-fourth aspect, a communication system is provided, where the system includes the apparatus according to the sixth aspect and an access network device.

According to a twenty-fifth aspect, a communication system is provided, where the system includes the apparatus according to the seventh aspect and the apparatus according to the eighth aspect.

According to a twenty-sixth aspect, a communication system is provided, where the system includes the apparatus according to the ninth aspect and a terminal device.

According to a twenty-seventh aspect, a communication system is provided, where the system includes the apparatus according to the tenth aspect and an access network device.

### BRIEF DESCRIPTION OF DRAWINGS

FIG. 1 is a schematic/diagram of DRX according to an embodiment of this application;
FIG. 2 is a schematic/diagram of an architecture of a communication system according to an embodiment of this application;
FIG. 3 is a schematic/diagram of an architecture of a communication system according to an embodiment of this application;
FIG. 4 is a schematic flowchart of a communication method according to an embodiment of this application;
FIG. 5 is a schematic flowchart of a communication method according to an embodiment of this application;
FIG. 6 is a schematic flowchart of a communication method according to an embodiment of this application;
FIG. 7 is a schematic flowchart of a communication method according to an embodiment of this application;
FIG. 8 is a schematic flowchart of a communication method according to an embodiment of this application;
FIG. 9 is a schematic flowchart of a communication method according to an embodiment of this application;
FIG. 10 is a schematic flowchart of a communication method according to an embodiment of this application;
FIG. 11 is a schematic flowchart of a communication method according to an embodiment of this application;
FIG. 12 is a schematic flowchart of a communication method according to an embodiment of this application;
FIG. 13 is a schematic/diagram of a structure of a communication apparatus according to an embodiment of this application; and
FIG. 14 is a schematic/diagram of a structure of a communication apparatus according to an embodiment of this application.

### DESCRIPTION OF EMBODIMENTS

To make the objectives, technical solutions, and advantages of embodiments of this application clearer, the following further describes embodiments of this application in detail with reference to the accompanying drawings.

In the following descriptions, some terms in embodiments of this application are described, to help a person skilled in the art have a better understanding.
(1) A terminal device may be a device having a wireless transceiver function or a chip that can be disposed in any device. The terminal device may also be referred to as user equipment (user equipment, UE), an access terminal, a subscriber unit, a subscriber station, a mobile station, a mobile, a remote station, a remote terminal, a mobile device, a user terminal, a wireless communication device, a user agent, or a user apparatus. The terminal device in embodiments of this application may be a mobile phone (mobile phone), a tablet computer (Pad), a computer with a wireless transceiver function, an XR device (such as a VR device, an AR device, or an MR device), a wireless terminal in industrial control (industrial control), a wireless terminal in self driving (self driving), a wireless terminal in video surveillance, a wearable terminal device, or the like. Alternatively, the terminal device may be eMBB UE, URLLC UE, an uncrewed aerial vehicle, another Internet of Things (Internet of Things, IoT) device, a positioning device, or the like.

A network device may be an apparatus configured to implement functions of an access network device. The access network device may be a device that communicates with a wireless terminal device over an air interface in an access network by using one or more cells. For example, the access network device may be a next generation NodeB (next Generation NodeB, gNB) in an NR system, or may be an evolved NodeB (evolved NodeB, eNB) in a long term evolution (long term evolution, LTE) system. Alternatively, the network device may be an apparatus that can support the network device in implementing a function of an access network device, for example, a system-on-chip, and the apparatus may be installed in the network device.

A core network device may be configured to provide a core network service for a terminal device that accesses the access network. The core network device may correspond to different devices in different systems. For example, in 4G, the core network device may correspond to a mobility management entity (mobility management entity, MME) and/or a serving gateway (serving gateway, S-GW). In 5G, the core network device may correspond to an access and mobility management function (access and mobility management function, AMF) entity, a session management function (session management function, SMF) entity, a user plane function (user plane function, UPF) entity, or the like.

(2) A terminal device with a reduced capability (reduced capability, REDCAP) may have at least one of the following features:
1. A maximum bandwidth within a frequency range (frequency range, FR) 1 during initial access and/or after initial access does not exceed 20 MHz. A maximum bandwidth within an FR 2 during initial access and/or after initial access does not exceed 100 MHz.
2. A minimum of one receive antenna (Rx) branch is supported.
3. A protocol version is NR Rel-17 or later.
4. Only half-duplex frequency division duplex (frequency division duplex, FDD) is supported.
5. If there is one Rx branch, a maximum of one downlink (downlink, DL) multiple-input multiple-output (multiple-in multiple-out, MIMO) layer is supported. If there are two Rx branches, two DL MIMO layers are supported.

The terminal device with the reduced capability may be understood as a terminal device with a reduced capability in contrast with a conventional terminal device (legacy UE). The capability includes but is not limited to features in the foregoing five aspects. The conventional terminal device may be, for example, an enhanced mobile broadband (enhanced Mobile Broadband, eMBB) terminal device or an ultra-reliable low-latency communication (ultra-reliable low-latency communication, URLLC) terminal device.

(3) A cell bar (cell bar) mechanism is an access control mechanism. In NR, an access network device sends a cell bar indication field (cellBarred) in a master information block (master information block, MIB), where the field indicates whether a current cell is barred (barred) or not barred (notBarred). If a cell is barred, UE in an RRC idle state and UE in an RRC inactive state cannot camp (camp) on the cell, and the cell is no longer used as a candidate cell for cell reselection (cell reselection) within a specific time period.

For the cell bar mechanism, a current standard has agreed to add, to a system information block 1 (system information block 1, SIB1), a cell bar indication specific to a terminal device with a reduced capability (RedCap specific cell bar indication), where the cell bar indication may be understood as a cell bar indication corresponding to the terminal device with the reduced capability. The access network device may indicate, based on the cell bar indication, that a cell is barred for the terminal device with the reduced capability.

(4) An intra-frequency reselection (intra-frequency reselection) mechanism is an access control mechanism. In NR, the access network device sends an intra-frequency reselection indication (IFRI, Intra-frequency Reselection Indication) field (intraFreqReselection) in the MIB, where the field indicates whether the terminal device can consider using a neighboring cell (namely, an intra-frequency neighboring cell) having a same frequency as the current cell as a candidate cell for reselection when the current cell is barred. If this field indicates "allowed" (allowed), the terminal device can consider the intra-frequency neighboring cell when performing cell reselection. If this field indicates "not allowed" (notAllowed), the terminal device cannot consider the intra-frequency neighboring cell as a candidate cell for cell reselection within a specific time period.

For an intra-frequency reselection mechanism, the current standard has agreed to add, to the SIB1, an intra-frequency reselection indication specific to the terminal device with the reduced capability (RedCap specific IFRI). For example, if the IFRI specific to the terminal device with the reduced capability is not sent in the SIB1, the terminal device with the reduced capability considers that the current cell does not support serving the terminal device with the reduced capability. If the IFRI specific to the terminal device with the reduced capability is sent in the SIB 1, the terminal device with the reduced capability determines, based on the IFRI specific to the terminal device with the reduced capability, whether intra-frequency reselection can be performed when considering that the current cell is barred.

### (5) Discontinuous reception (discontinuous reception, DRX) mechanism

The DRX mechanism is introduced to reduce power consumption of the terminal device while ensuring that data can be effectively transmitted. When there is no DRX mechanism, the terminal device keeps monitoring a physical downlink control channel (physical downlink control channel, PDCCH) to check whether there is downlink control information (downlink control information, DCI) from a serving cell. However, in practice, in many cases, the terminal device does not effectively keep exchanging information with the network. Therefore, if the terminal device continuously monitors the PDCCH, a lot of power is consumed. On the contrary, when DRX is configured, the terminal device may periodically not monitor the PDCCH sometimes, but monitor the PDCCH sometimes. In this way, power can be saved.

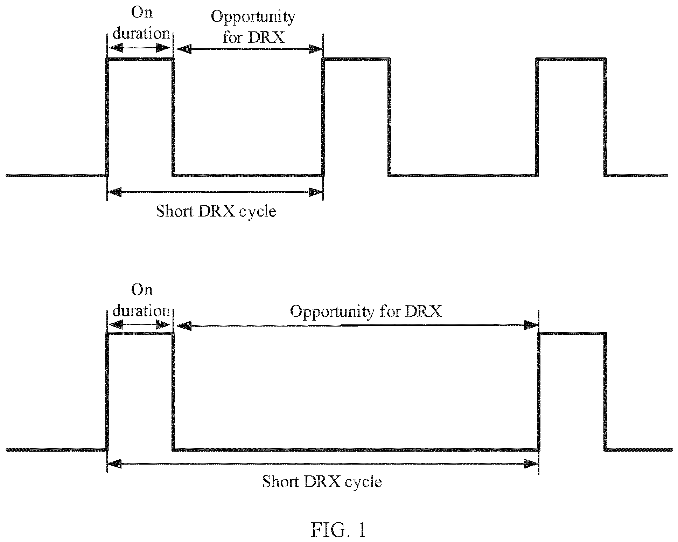

FIG. 1 shows a DRX cycle configuration. Within a time period identified as "on duration (On Duration)", the terminal device is within a DRX active time (DRX Active Time), and the terminal device needs to monitor the PDCCH within this time period. A time period identified as "opportunity for DRX (Opportunity for DRX)" is a DRX inactive time, that is, a time within which the terminal device does not monitor the PDCCH to save power. The DRX mechanism has two cycle configurations: a long cycle and a short cycle.

When DRX is configured, upon arrival of each DRX cycle, the terminal device first enters on duration, starts a DRX on duration timer (drx-onDurationTimer), and enters an active state. Within the on duration period, the terminal device continuously monitors the PDCCH. If no scheduling information of the PDCCH is received within this time period, after the DRX on duration timer expires, the terminal device enters an inactive state, and stops monitoring the PDCCH. If scheduling information of the PDCCH is received within this time period, the terminal device starts or restarts a DRX inactivity timer (drx-InactivityTimer). When the DRX inactivity timer runs, the terminal device needs to continuously monitor the PDCCH, and keep in the active state.

In addition, if there is uplink or downlink data that needs to be retransmitted, a DRX uplink retransmission timer (drx-RetransmissionTimerUL) or a DRX downlink retransmission timer (drx-RetransmissionTimerDL) is further started. During running of the two timers, the terminal device keeps in the active state.

In embodiments of this application, the term "at least one" means one or more, and the term "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between associated objects. The term "at least one of the following items (pieces)" or an expression similar to the term indicates any combination of these items, including any combination of singular items (pieces) or plural items (pieces). For example, at least one of a, b, or c may represent a, b, c, a-b, a-c, b-c, or a-b-c, where a, b, and c may be singular or plural.

Unless otherwise stated on the contrary, ordinal terms such as "first" and "second" mentioned in embodiments of this application are used to distinguish between a plurality of objects, and are not intended to limit sizes, content, a sequence, a time sequence, priorities, importance, or the like of the plurality of objects. For example, a first access network device and a second access network device are used merely to distinguish between different access network devices, but do not indicate different locations, capabilities, priorities, importance, or the like of the two access network devices.

The foregoing describes some noun concepts used in embodiments of this application. The following describes technical features of embodiments of this application.

Mobility management of the terminal device is as follows: The terminal device first operates within coverage of an access network device 1, and then due to movement of the terminal device or other reasons, the access network device 1 considers that the terminal device needs to be handed over to a neighboring access network device 2. The access network device 1 initiates a handover request to the access network device 2, and the access network device 2 determines whether to accept the handover of the terminal device. If the access network device 2 accepts the handover of the terminal device, the access network device 2 sends a handover request acknowledgement to the access network device 1, to continue to complete the handover procedure.

Currently, when a source access network device, that is, the access network device 1, selects a target access network device to which the terminal device is to be handed over, the selection is based on a measurement result reported by the terminal device. However, some novel terminal devices, such as terminal devices with reduced capabilities, are introduced in the NR system. A terminal device with a reduced capability is used as an example. For the terminal device with the reduced capability, an access network device needs to provide an additional configuration, and the terminal device with the reduced capability may be handed over to an access network device that does not support serving the terminal device with the reduced capability. However, the access network device that does not support serving the terminal device with the reduced capability may not normally serve the terminal device with the reduced capability. For example, because the access network device does not know an accurate capability of the terminal device, the access network device may provide, for the terminal device, a configuration that does not match the capability of the terminal device (for example, a bandwidth configured for the terminal device for use exceeds a maximum bandwidth that can be supported by the terminal device). As a result, the terminal device with the reduced capability cannot operate normally. Therefore, how to improve communication performance of the novel terminal device is an urgent technical problem to be resolved.

Based on this, embodiments of this application provide a communication method and apparatus to improve communication performance of a novel terminal device. The method and the apparatus are based on a same inventive concept. Because the method and the apparatus have a similar problem-resolving principle, mutual reference may be made for implementations of the apparatus and the method, and no repeated description is provided.

The communication method provided in this application may be applied to various communication systems, for example, an Internet of Things (Internet of Things, IoT), a narrowband Internet of Things (narrowband Internet of Things, NB-IoT), LTE, a 5th generation (5G) communication system, an LTE-5G hybrid architecture, a 5G new radio (new radio, NR) system, 6G, or a new communication system emerging in future communication development.

The communication method provided in embodiments of this application may be applied to a communication system including an access network device and a terminal device, and the communication system may further include a core network device. Any two access network devices in the communication system may be connected to a same core network device, or may be connected to different core network devices.

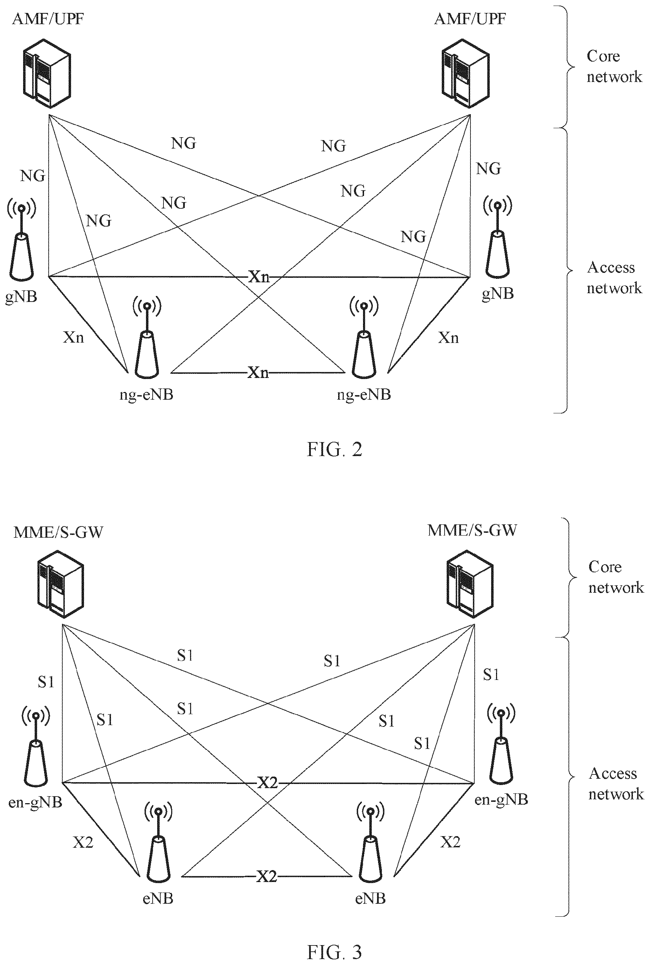

The communication system may be a 5G NR communication system. An interface between a core network device and a radio access network device is an NG interface. Different access network devices are connected through an Xn interface. For example, the access network device is a gNB or a ng-eNB, and the core network device is an AMF/UPF. Connection relationships between the AMF/UPF and the access network device and between different AMFs/UPFs and the access network device may be shown in FIG. 2.

The communication system may be an LTE communication system. An interface between a core network device and an access network device is an S1 interface. Different access network devices are connected through an X2 interface. For example, the access network device is an eNB or an en-gNB, and the core network device is an MME/S-GW. Connection relationships between the MME/S-GW and the access network device and between different MMEs/S-GWs and the access network device may be shown in FIG. 3.

A network architecture and a service scenario described in embodiments of this application are intended to describe the technical solutions in embodiments of this application more clearly, and do not constitute any limitation on the technical solutions provided in embodiments of this application. A person of ordinary skill in the art may know that, with evolution of a network architecture and emergence of a new service scenario, the technical solutions provided in embodiments of this application are also applicable to a similar technical problem.

The following describes the technical solutions in embodiments of this application with reference to accompanying drawings in embodiments of this application.

In embodiments of this application, "supporting serving a first type of terminal device" may also be understood as supporting communicating with the first type of terminal device, supporting accepting handover of the first type of terminal device, supporting configuring the first type of terminal device, or the like.

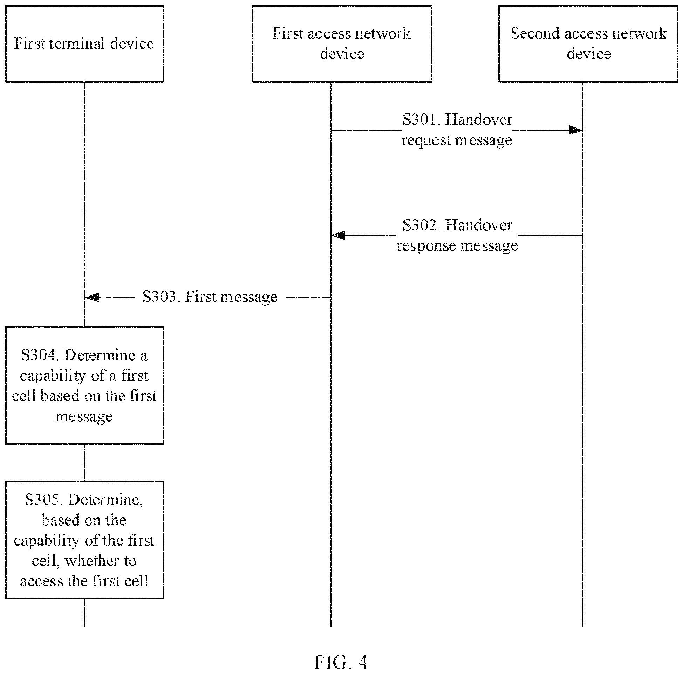

FIG. 4 is a schematic flowchart of a communication method according to this application. The method includes the following steps.

S301. A first access network device sends a handover request message to a second access network device. Correspondingly, the second access network device receives the handover request message from the first access network device.

The handover request message is used to request to hand over a first terminal device to a first cell of the second access network device. For example, the handover request message may include a handover preparation information message (HandoverPreparationInformation message).

In an implementation, the first access network device may determine the first cell based on a measurement result reported by the first terminal device.

In an example, the first access network device may be an access network device in an LTE system, an access network device in a 5G NR system, or another access network device that appears in future communication development; and the second access network device may be an access network device in the SGNR system or another access network device that appears in future communication development. This is not specifically limited herein.

S302. The second access network device sends a handover response message to the first access network device. Correspondingly, the first access network device receives the handover response message from the second access network device.

The handover request response message indicates that the handover of the first terminal device to the first cell is accepted. The handover request response message may be a handover (handover, HO) request acknowledgement (HO request acknowledgement) message. In an implementation, the second access network device may determine, based on factors such as a terminal device capability and a network load status, whether to accept the handover of the first terminal device to the first cell.

If the second access network device supports serving a first type of terminal device, the handover response message carries first information, or if the second access network device does not support serving a first type of terminal device, the handover response message does not carry first information, where the first information indicates that the second access network device supports serving the first type of terminal device.

For example, the first type of terminal device may be a terminal device with a reduced capability, or may be eMMB UE, URLLC UE, an uncrewed aerial vehicle, an X-reality (X reality, XR) device (such as a virtual reality (virtual reality, VR) device, a mobile application augmented reality (augmented reality, AR) device, or a mixed reality (mixed reality, MR) device), an Internet of Things (Internet of Things, IoT) device, a positioning device, or the like.

Optionally, the handover response message may explicitly carry the first information. For example, the handover response message carries the first information by using a field. The first information is explicitly carried, so that the terminal device can intuitively determine a capability of a target access network device, thereby reducing complexity of the terminal device.

Alternatively, the handover response message may implicitly carry the first information. For example, the handover response message may implicitly carry the first information by carrying information specific to the first type of terminal device. The first message carries the information specific to the first type of terminal device and coming from the target access network device, to implicitly indicate the capability of the target access network device. Therefore, the terminal device can determine the capability of the target access network device, and the terminal device can obtain, in advance, the information specific to the first type of terminal device and broadcast by the target access network device. In this way, communication performance is improved.

For example, the information specific to the first type of terminal device may be information specific to the first type of terminal device and carried in system information such as a SIB1. For example, the information specific to the first type of terminal device may include at least one of the following: an intra-frequency reselection indication corresponding to the first type of terminal device, which may also be referred to as an intra-frequency reselection indication specific to the first type of terminal device; a cell bar indication corresponding to the first type of terminal device, which may also be referred to as a cell bar indication specific to the first type of terminal device; resource configuration information corresponding to the first type of terminal device, which may also be referred to as resource configuration information specific to the first type of terminal device, for example, bandwidth part (bandwidth part, BWP) configuration information corresponding to the first type of terminal device; and random access resource configuration information corresponding to the first type of terminal device. It should be noted that the system information is system information sent by the second access network device or the first cell.

If the first type of terminal device is a terminal device with a reduced capability, for the intra-frequency reselection indication specific to the first type of terminal device and the cell bar indication specific to the first type of terminal device, refer to related descriptions in the foregoing term descriptions. Details are not described herein again. The resource configuration information specific to the first type of terminal device may be understood as information about a resource configured by the second access network device for the terminal device with the reduced capability, for example, BWP configuration information specific to the terminal device with the reduced capability, or random access resource configuration information specific to the terminal device with the reduced capability.

In an implementation, the second access network device may send the first information when the first terminal device is the first type of terminal device. A terminal device that does not belong to the first type of terminal device may not need to determine whether the target access network device supports serving the first type of terminal device. Therefore, the second access network device sends the first information when the first terminal device is the first type of terminal device, and may not send the first information when the first terminal device does not belong to the first type of terminal device, thereby reducing signaling overheads.

In another implementation, when the first terminal device is the first type of terminal device and a radio access technology standard supported by the first access network device is LTE, the second access network device may send the first information. In a possible embodiment, in a scenario in which the radio access technology standard supported by the first access network device is LTE, the second access network device may use the method in FIG. 4. Therefore, the second access network device may send the first information in the scenario in which the radio access technology standard supported by the first access network device is LTE, and does not send the first information in other scenarios, so that signaling overheads can be reduced.

S303. The first access network device sends a first message to the first terminal device. Correspondingly, the first terminal device receives the first message sent by the first access network device.

The first message indicates to hand over the first terminal device to the first cell. For example, the first message may be an RRC reconfiguration message (RRC reconfiguration message). If the handover response message sent by the second access network device carries the first information, the first message sent by the first access network device to the first terminal device carries the first information. Correspondingly, if the handover response message sent by the second access network device does not carry the first information, the first message sent by the first access network device to the first terminal device does not carry the first information.

In an implementation, the first information may be carried in configuration information carried in the handover response message, and the configuration information may be used to configure communication between the second access network device and the first terminal device. The configuration information may be used as an information element of the first message. Therefore, when the configuration information carries the first information, the first message carries the first information; or when the configuration information does not carry the first information, the first message does not carry the first information.

In a specific example, the handover response message may include a handover command message (HandoverCommand message), the handover command message may include an RRC reconfiguration message (RRCReconfiguration message) generated by a second base station for UE, and the first information may be carried in the RRC reconfiguration message. The first message sent by the first access network device may include the RRC reconfiguration message.

S304. The first terminal device determines a capability of the first cell based on the first message.

The capability of the first cell is whether the first cell supports serving the first type of terminal device, and the first terminal device belongs to the first type of terminal device. It may be understood that if the first terminal device does not belong to the first type of terminal device, the first terminal device may not perform S304.

For example, an implementation of S304 is: if the first message carries the first information, determining that the first cell supports serving the first type of terminal device; or if the first message does not carry the first information, determining that the first cell does not support serving the first type of terminal device.

S305. The first terminal device determines, based on the capability of the first cell, whether to access the first cell.

Specifically, if the first cell supports serving the first type of terminal device, the first terminal device accesses the first cell. In an implementation, that the first terminal device accesses the first cell may be: the first terminal device is handed over to the first cell, or the first terminal device performs downlink synchronization with the first cell and/or the first terminal device initiates random access to the first cell.

If the first cell does not support serving the first type of terminal device, the first terminal device performs an RRC connection re-establishment procedure, or establishes an RRC connection to a second cell, or enters an RRC idle state. In this manner, the terminal device can access another access network device in time when the target access network device does not support serving a corresponding type of terminal device, so that a waste of resources for accessing the first cell can be avoided. Therefore, resource utilization can be improved, power consumption of the terminal device can be reduced, mobility performance of the terminal device can be enhanced, and service performance of the terminal device can be improved.

In an implementation, that the first terminal device performs an RRC connection re-establishment procedure may be: the first terminal device may select a cell of the access network device in the LTE system or send an RRC re-establishment request message (RRC re-establishment request message) to the cell. Alternatively, the first terminal device may select a cell of an access network device that supports serving the first type of terminal device to initiate random access, or send an RRC re-establishment request message (RRC re-establishment request message) to the cell.

A procedure in which the first terminal device establishes an RRC connection to the second cell may be as follows: The first terminal device may select the second cell or send an RRC connection establishment request message to the second cell. A radio access technology standard of an access network device corresponding to the second cell is LTE, or an access network device corresponding to the second cell supports serving the first type of terminal device.

Further, during random access or after random access is completed in a new cell, the first terminal device may indicate a first cause value to the cell. The first cause value indicates that the first terminal device initiates an RRC connection re-establishment procedure because a target cell to which the first terminal device is handed over does not support serving the first type of terminal device. Optionally, the first terminal device may further send, to the new cell, information about the target cell, that is, information about the first cell, for example, identification information of the cell.

In an implementation, the cause value and/or the cell information may be carried in an RRC re-establishment message (RRC re-establishment message).

In an example for description, if the first terminal device triggers an RRC re-establishment procedure or enters the RRC idle state because the second access network device does not support serving the first type of terminal device, this case may not be used as an example of a handover failure. The first terminal device may not record information about the current handover in a report related to network planning or network optimization such as a handover failure report. Currently, a handover failure is recorded as an example for adjusting a handover policy such as a handover occasion and a signal quality threshold or a signal strength threshold in a handover procedure. If a handover failure caused because the target access network device does not support serving the first type of terminal device is used as a handover failure example, the handover policy such as the handover occasion and the signal quality threshold or the signal strength threshold is inaccurate. Therefore, in an embodiment of this application, a handover failure caused because the second access network device does not support serving the first type of terminal device is not used as a handover failure example, so that impact on the handover policy such as the handover occasion and the signal quality threshold or the signal strength threshold can be avoided, thereby facilitating network planning or network optimization.

It should be noted that, in this embodiment of this application, the first access network device and the second access network device may interact with each other based on an Xn/X2 interface, or may interact with each other by using a core network device. The first access network device and the second access network device may be connected to a same core network device, or may be connected to different core network devices. This is not specifically limited herein.

In this embodiment of this application, the target access network device sends the first information to the terminal device through a source access network device in the handover procedure, so that the terminal device can determine, based on whether the first information is received, whether the target access network device supports serving the corresponding type of terminal device, so that a subsequent operation of the handover can be determined in time. In this way, the terminal device can be prevented from being handed over to a cell that does not support serving this type of terminal device. Therefore, mobility performance of the terminal device can be enhanced, and service performance of the terminal device can be improved. This helps reduce communication interruption of the terminal device and improve communication performance of the terminal device.

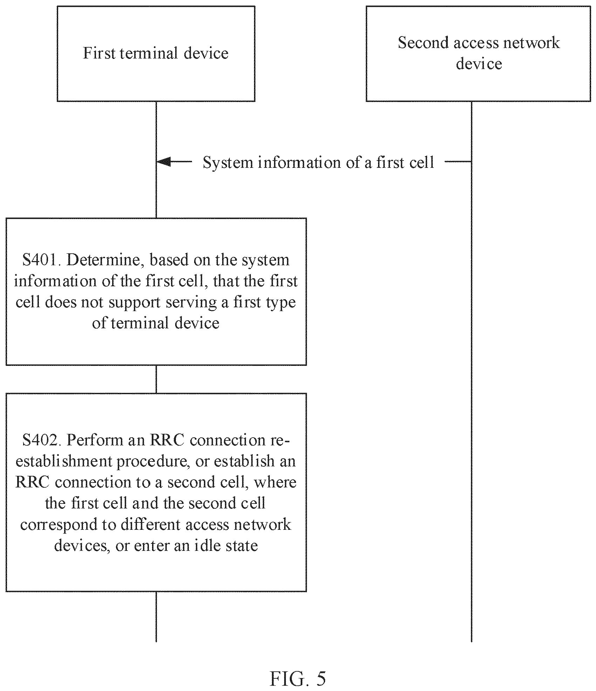

FIG. 5 is a schematic flowchart of a communication method according to this application. The method includes the following steps.

S401. A first terminal device determines, based on system information of a first cell, that the first cell does not support serving a first type of terminal device, where the first terminal device belongs to the first type of terminal device. For the first type of terminal device, refer to related descriptions of the first type of terminal device in the method in FIG. 4. Details are not described herein again.

An implementation of S401 is: if the system information includes first information, the first terminal device determines that the first cell supports serving the first type of terminal device; or if the system information does not include first information, the first terminal device determines that the first cell does not support serving the first type of terminal device.

If an access network device broadcasts information specific to the first terminal device in the system information, it indicates that the access network device supports serving the first type of terminal device. Therefore, accuracy of determining a capability of the access network device by the terminal device can be improved in the foregoing manner.

For example, the system information may be a SIB1.

The first information may be information specific to the first type of terminal device. For details, refer to related descriptions of "information specific to the first type of terminal device" in the method in FIG. 4. Details are not described herein again.

It may be understood that if the first terminal device is not the first type of terminal device, the first terminal device may not perform the method in FIG. 5.

In a possible implementation, after being handed over from a third cell to the first cell, the first terminal device may determine, based on the system information of the first cell, whether the first cell supports serving the first type of terminal device.

The third cell and the first cell correspond to different access network devices.

In a specific implementation, before S401, the following steps A1 to A4 may be performed:
A1. A first access network device corresponding to the third cell sends a handover request message to a second access network device corresponding to the first cell, where the handover request message is used to request to hand over the first terminal device to the first cell.

The third cell may be a serving cell of the first terminal device.

A2. The second access network device sends a handover response message to the first access network device, where the handover request response message indicates to accept handover of the first terminal device to the first cell.

The handover request response message may be a handover request acknowledgement (HO request acknowledgement) message. In an implementation, the second access network device may determine, based on factors such as a terminal device capability and a network load status, whether to accept the handover of the first terminal device to the first cell.

A3. The first access network device sends an RRC reconfiguration message to the first terminal device, where the RRC reconfiguration message may carry configuration information (for example, the RRC reconfiguration message) sent by the second access network device to the first terminal device, and the configuration information is used to configure the first terminal device to access the first cell.

A4. The first terminal device accesses the first cell.

In a handover procedure, because a source access network device selects a target access network device based on a measurement result reported by the terminal device, the terminal device may be handed over to a target access network device that does not support serving the corresponding type of terminal device. In the foregoing manner, the method in FIG. 5 may be used in the handover procedure, so that when being handed over to the target access network device, the terminal device can determine, in time based on system information of the target access network device, that the terminal device accesses an unsuitable access network device, so that the terminal device can access another access network device or enter an idle state in time, thereby avoiding inability of operating because the target access network device does not support serving the corresponding type of terminal device when a service is performed. It can be learned that, based on the foregoing procedure, mobility performance of the terminal device can be enhanced, and service performance of the terminal device can be improved.

In an example, the first access network device may be an access network device in an LTE system, an access network device in a 5G NR system, or another access network device that appears in future communication development, and the second access network device may be an access network device in the 5G NR system or another access network device that appears in future communication development. This is not specifically limited herein.

S402. The first terminal device performs an RRC connection re-establishment procedure, or establishes an RRC connection to a second cell, where the first cell and the second cell correspond to different access network devices, or enters an idle state.

In an example for description, the second cell and the third cell may correspond to a same access network device. In an example, the second cell and the third cell may be a same cell.

For specific implementations of "the first terminal device accesses the first cell" and "the first terminal device establishes an RRC connection to the second cell", refer to related descriptions in the method in FIG. 4. Details are not described herein again.

Further, during random access or after a random access procedure is completed in a new cell, the first terminal device may indicate a first cause value to the cell. The first cause value indicates that the first terminal device initiates an RRC connection re-establishment procedure because a target cell to which the first terminal device is handed over does not support serving the first type of terminal device. Optionally, the first terminal device may further send, to the new cell, information about the target cell, that is, information about the first cell, for example, identification information of the cell.

In an implementation, the cause value and/or the cell information may be carried in an RRC re-establishment message.

In an example for description, if the first terminal device triggers an RRC re-establishment procedure or enters an RRC idle state because the second access network device does not support serving the first type of terminal device, this case may not be used as an example of a handover failure. The first terminal device may not record information about the current handover in a report related to network planning or network optimization such as a handover failure report. Currently, a handover failure is recorded as an example for adjusting a handover policy such as a handover occasion and a signal quality threshold or a signal strength threshold in a handover procedure. If a handover failure caused because the target access network device does not support serving the first type of terminal device is used as a handover failure example, the handover policy such as the handover occasion and the signal quality threshold or the signal strength threshold is inaccurate. Therefore, in an embodiment of this application, a handover failure caused because the second access network device does not support serving the first type of terminal device is not used as a handover failure example, so that impact on the handover policy such as the handover occasion and the signal quality threshold or the signal strength threshold can be avoided, thereby facilitating network planning or network optimization.

Optionally, if the first terminal device determines, based on the system information of the first cell, that the first cell supports serving the first type of terminal device, the first terminal device may continue to operate in the first cell, or maintain an RRC connection to the first cell or the second access network device.

It should be noted that, in this embodiment of this application, the first access network device and the second access network device may interact with each other based on an Xn/X2 interface, or may interact with each other by using a core network device. The first access network device and the second access network device may be connected to a same core network device, or may be connected to different access network devices. This is not specifically limited herein.

In this embodiment of this application, after being handed over to the target cell or the target access network device, the terminal device determines, based on the system information of the target cell or the target access network device, whether the cell or the access network device supports serving the corresponding type of terminal device. If the cell or the access network device does not support serving the corresponding type of terminal device, the terminal device can find, in time by using the foregoing method, that the terminal device is handed over to an unsuitable cell, so that a serving cell or a serving access network device can be changed in time. In comparison with finding that a terminal device is handed over to an unsuitable cell due to a scheduling or transmission problem when a service is performed, in this embodiment of this application, handover of the terminal device to an unsuitable cell can be found before a service is performed or before a problem occurs. Therefore, mobility performance of the terminal device can be enhanced, and service performance of the terminal device can be improved. This helps reduce communication interruption of the terminal device and improve communication performance of the terminal device.

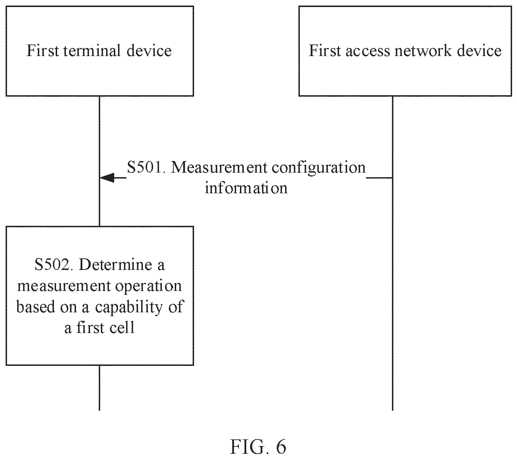

FIG. 6 is a schematic flowchart of a communication method according to this application. The method includes the following steps.

S501. A first access network device sends measurement configuration information to a first terminal device. Correspondingly, the first terminal device receives the measurement configuration information sent by the first access network device.

The measurement configuration information indicates the first terminal device to measure a first cell. It should be understood that the measurement configuration information may further instruct the first terminal device to measure another cell. Herein, only the first cell is used as an example for description. A cell that the measurement configuration information instructs to measure is not limited. In addition, for a manner of measuring another cell by the first terminal device, refer to the manner of measuring the first cell by the first terminal device. Details are not repeated.

For example, the measurement configuration information may include information about a to-be-measured frequency or cell, and may include information about a frequency of the first cell or information about the first cell.

S502. The first terminal device determines a measurement operation based on a capability of the first cell.

The capability of the first cell is whether the first cell supports serving a first type of terminal device, and the first terminal device belongs to the first type of terminal device. For the first type of terminal device, refer to related descriptions of the first type of terminal device in the method in FIG. 4. Details are not described herein again.

Specifically, if the first cell supports serving the first type of terminal device, the first terminal device measures the first cell.

If the first cell does not support serving the first type of terminal device, the first terminal device may not measure the first cell, and/or does not report a measurement result of the first cell.

In a possible implementation, the first terminal device may determine the capability of the first cell in the following manner: determining the capability of the first cell based on stored information, where the stored information includes: information about a cell that supports serving the first type of terminal device, and/or information about a cell that does not support serving the first type of terminal device. For example, the first terminal device may record a cell in which the first terminal device operates normally in a connected state or a serving cell on which the first terminal device camps in a non-connected state. Alternatively, the first terminal device determines, based on neighboring cell information broadcast by a serving cell, a cell that supports or does not support serving the first type of terminal device.

In another possible implementation, the first terminal device may determine the capability of the first cell in the following manner: determining the capability of the first cell based on system information of the first cell. For example, the first terminal device may obtain a SIB1 of the first cell before measuring the first cell or when measuring the first cell, and determine the capability of the first cell based on whether first information is broadcast in the SIB1. The first information may be information specific to the first type of terminal device. For details, refer to related descriptions of "information specific to the first type of terminal device" in the method in FIG. 4. Details are not described herein again.

It may be understood that, according to the method in an embodiment of this application, the measurement result reported by the first terminal device does not include a measurement result of a cell that does not support serving the first type of terminal device.

In this embodiment of this application, a measurement reporting process of the terminal device is controlled, so that a measurement result reported by the terminal device to a source access network device does not include a measurement result of a cell that does not support serving a corresponding type of terminal device. Therefore, a probability that the source access network device selects a cell that does not support serving the corresponding type of terminal device as a handover target can be reduced. Therefore, mobility performance of the terminal device can be enhanced, and service performance of the terminal device can be improved. This helps reduce communication interruption of the terminal device and improve communication performance of the terminal device.

In addition, in the foregoing manner, a measurement operation on the cell that does not support serving the corresponding type of service can be avoided, some unnecessary measurement overheads of the terminal device can be reduced, and additional power consumption of the terminal device can be reduced.

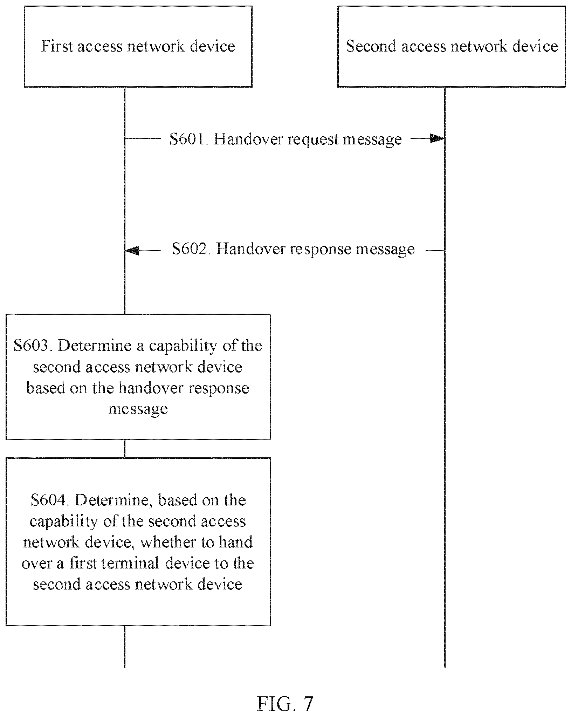

FIG. 7 is a schematic flowchart of a communication method according to this application. The method includes the following steps.

S601. A first access network device sends a handover request message to a second access network device, where the handover request message is used to request to hand over a first terminal device to a first cell. Correspondingly, the second access network device receives the handover request message sent by the first access network device.

In an implementation, the first access network device may determine the first cell based on a measurement result reported by the first terminal device.

In an example, the first access network device may be an access network device in an LTE system, an access network device in a 5G NR system, or another access network device that appears in future communication development, and the second access network device may be an access network device in the 5G NR system or another access network device that appears in future communication development. This is not specifically limited herein.

S602. The second access network device sends a handover response message to the first access network device, where the handover request response message indicates to accept handover of the first terminal device to the first cell. Correspondingly, the first access network device receives the handover request message sent by the second access network device.

The handover request response message may be a handover request acknowledgement (HO request acknowledgement) message.

In an implementation, the second access network device may determine, based on factors such as a terminal device capability and a network load status, whether to accept the handover of the first terminal device to the first cell.

S603. The first access network device determines a capability of the second access network device based on the handover response message, where the capability of the second access network device is whether the second access network device supports serving a first type of terminal device.

Specifically, if the handover response message carries first information, the first access network device determines that the second access network device supports serving the first type of terminal device; or if the handover response message does not carry first information, the first access network device determines that the second access network device does not support serving the first type of terminal device. The first information indicates that the second access network device supports serving the first type of terminal device.

For a manner in which the handover response message carries the first information and detailed descriptions of the first type of terminal device, refer to related descriptions in FIG. 4. Details are not described herein again.

In an implementation, the second access network device may send the first information when the first terminal device is the first type of terminal device. A terminal device that does not belong to the first type of terminal device may not need to determine whether a target access network device supports serving the first type of terminal device. Therefore, the second access network device sends the first information when the first terminal device is the first type of terminal device, and may not send the first information when the first terminal device does not belong to the first type of terminal device, thereby reducing signaling overheads.

In another implementation, when the first terminal device is the first type of terminal device and a radio access technology standard supported by the first access network device is higher than LTE, the second access network device may send the first information. For example, the radio access technology standard supported by the first access network device is 5G NR. In a possible embodiment, in a scenario in which the radio access technology standard supported by the first access network device is higher than LTE, the second access network device may use the method in FIG. 7. Therefore, the second access network device may send the first information in the scenario in which the radio access technology standard supported by the first access network device is higher than LTE, and does not send the first information in other scenarios, so that signaling overheads can be reduced.

S604. The first access network device determines, based on the capability of the second access network device, whether to hand over the first terminal device to the second access network device.

Specifically, if the second access network device supports serving the first type of terminal device, the first terminal device is handed over to the second access network device.

If the second access network device does not support serving the first type of terminal device, a third access network device is selected as a target access network device. In this manner, a source access network device may hand over the terminal device to another access network device in time when the target access network device does not support serving a corresponding type of terminal device, so that a waste of resources of the terminal device for accessing the first cell can be avoided. Therefore, resource utilization can be improved, power consumption of the terminal device can be reduced, mobility performance of the terminal device can be enhanced, and service performance of the terminal device can be improved.

It may be understood that the first access network device may perform S603 and S604 when the first terminal device belongs to the first type of terminal device. If the first terminal device does not belong to the first type of terminal device, the first access network device may not perform S603 and S604.

It should be noted that, in an embodiment of this application, the first access network device and the second access network device may interact with each other based on an Xn/X2 interface, or may interact with each other by using a core network device. The first access network device and the second access network device may be connected to a same core network device, or may be connected to different access network devices. This is not specifically limited herein.

In this embodiment of this application, the target access network device sends the first information to the source access network device in the handover procedure, so that the source access network device can determine, based on whether the first information is received, whether the target access network device supports serving the corresponding type of terminal device, so that a subsequent operation of the handover can be determined in time. In this way, the terminal device can be prevented from being handed over to a cell that does not support serving this type of terminal device. Therefore, mobility performance of the terminal device can be enhanced, and service performance of the terminal device can be improved.

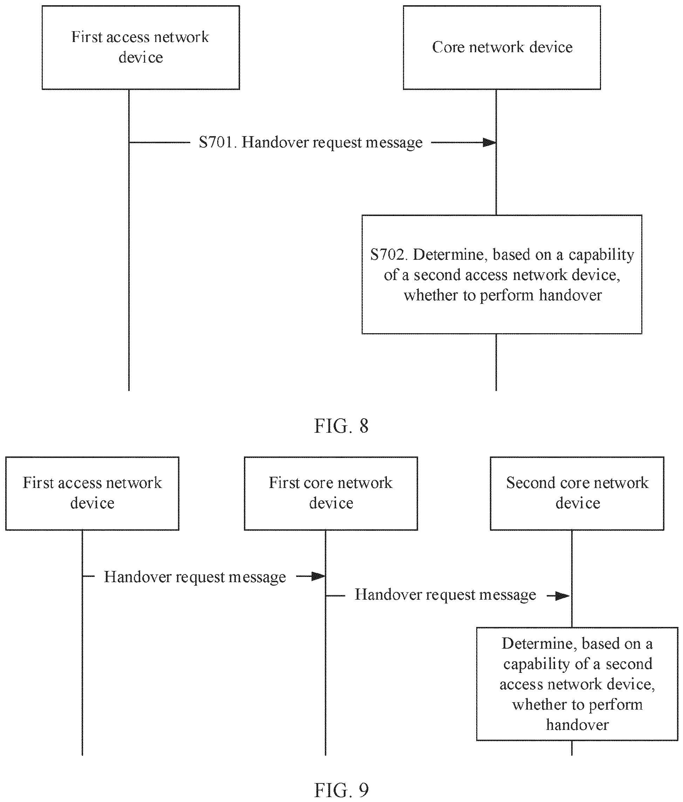

FIG. 8 is a schematic flowchart of another communication method according to this application. The method may be applied to a scenario in which a first access network device interacts with a second access network device by using a core network device. The first access network device and the second access network device may be connected to a same access network device, or may be connected to different access network devices.

In an example, the first access network device may be an access network device in an LTE system, an access network device in a 5G NR system, or another access network device that appears in future communication development, and the second access network device may be an access network device in the SGNR system or another access network device that appears in future communication development. The core network device may be an AMF, an MME, or another core network device. This is not specifically limited herein.

The following separately provides descriptions with reference to a scenario in which the first access network device and the second access network device are connected to a same access network device and a scenario in which the first access network device and the second access network device are connected to different access network devices.

Scenario 1: The first access network device and the second access network device are connected to a same access network device. Refer to FIG. 8. The method includes the following steps.

S701. The first access network device sends a handover request message to a core network device. Correspondingly, the core network device receives the handover request message from the first access network device.

The handover request message is used to request to hand over a first terminal device to a first cell of the second access network device.

In an implementation, the first access network device may determine the first cell based on a measurement result reported by the first terminal device.

S702. The core network device determines, based on a capability of the second access network device, whether to perform the handover.

The capability of the second access network device is whether the second access network device supports serving a first type of terminal device.

Specifically, if the second access network device does not support serving the first type of terminal device, the core network device sends a notification message to the first access network device, where the notification message is used to notify that the handover fails, or that the handover is not performed, or that the handover is suspended/stopped, or that the handover is rejected.

If the second access network device supports serving the first type of terminal device, the core network device sends a handover request message to the second access network device.

Further, the core network device may send a first cause value to the first access network device, where the first cause value indicates that a cause of the handover failure is that the second access network device does not support serving the first type of terminal device. For example, the notification message sent by the core network device to the first access network device may carry the first cause value. The foregoing design facilitates network planning.

It may be understood that the core network device may control the handover by using the method in FIG. 8 when the first terminal device belongs to the first type of terminal device. If the first terminal device does not belong to the first type of terminal device, the core network device may not use the method in FIG. 8, but forwards the handover request message from the first access network device to the second access network device after receiving the handover request message from the first access network device. For detailed descriptions of the first type of terminal device, refer to related descriptions in the method in FIG. 4.

In a possible implementation, the core network device may obtain the capability of the second access network device. A specific method may include but is not limited to: reporting, by the second access network device, the capability to the core network device when registering with the core network device, or requesting, by the core network device, the capability from the second access network device, or the like.

Scenario 2: The first access network device and the second access network device are connected to different access network devices. A process of performing the method provided in an embodiment of this application in the scenario 2 is similar to a process of performing the method provided in an embodiment of this application in the scenario 1. A difference is as follows: In the scenario 1, a core network device that receives the handover request message sent by the first access network device and a core network device that controls the handover are a same core network device. In the scenario 2, a core network device that receives the handover request message sent by the first access network device and a core network device that controls the handover are different core network devices. The core network device that receives the handover request message sent by the first access network device is a first core network device connected to the first access network device. After receiving the handover request message, the first core network device forwards the handover request message to a second core network device connected to the second access network device, and then the second core network device controls the handover, as shown in FIG. 9. For a specific control process, refer to the process in FIG. 8. Details are not described herein again.

In this embodiment of this application, the first core network device may forward the handover request message through an interface directly connected to the second core network device, or may forward the handover request message by using another device.

In this embodiment of this application, the core network device controls a handover procedure based on a capability of a target access network device, so that the terminal device can be prevented from being handed over to a cell that does not support serving this type of terminal device. Therefore, mobility performance of the terminal device can be enhanced, and service performance of the terminal device can be improved. This helps reduce communication interruption of the terminal device and improve communication performance of the terminal device.

FIG. 4 to FIG. 9 provide a method for improving communication performance of a novel terminal device. In addition, a manner of completing reporting of a cell global identifier (cell global identifier, CGI) by the terminal device is that the terminal device obtains a SIB1 of a target cell within a DRX inactive time and obtains related CGI information from the SIB1, and then the terminal device fills in a measurement report with the CGI information and reports the measurement report to a current serving cell. For some terminal devices with low processing capabilities, for example, a terminal device with a reduced capability, because the processing capability is low, the terminal device needs to spend a longer time in obtaining a CGI. Therefore, how these terminal devices report CGIs is an urgent problem to be resolved.

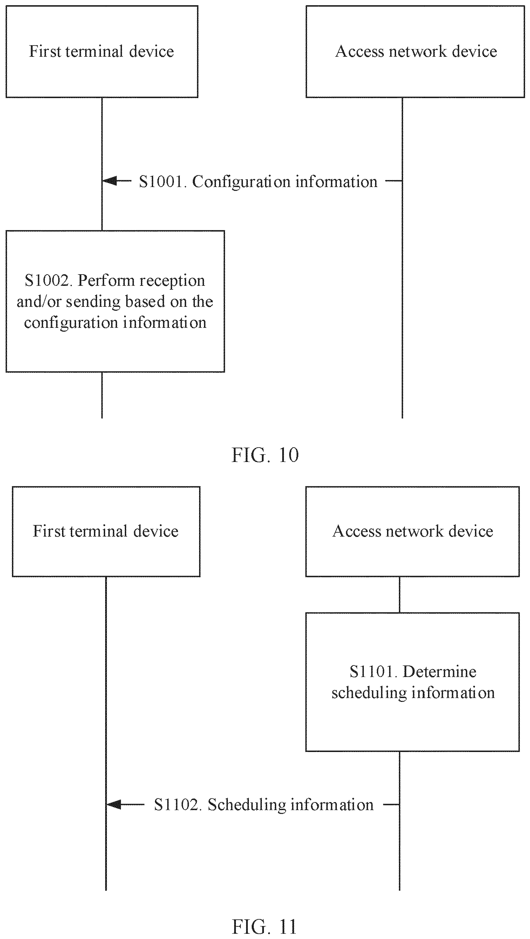

To resolve this problem, an embodiment of this application provides a communication method. In the method, a DRX configuration is restricted, to ensure, as much as possible, that a terminal device with a low processing capability has sufficient time to obtain a CGI, so that the CGI can be reported. Refer to FIG. 10. The method includes the following steps.

S1001. An access network device sends configuration information to a terminal device. Correspondingly, the terminal device receives the configuration information sent by the access network device.

The configuration information is used to configure DRX, and DRX configured by using the configuration information meets at least one of the following:
a DRX cycle is greater than or equal to a first value, where the DRX cycle may be a long DRX cycle and/or a short DRX cycle;
a DRX inactivity timer, a DRX on duration timer, or a DRX retransmission timer is less than or equal to a second value, where second values corresponding to the DRX inactivity timer, the DRX on duration timer, and the DRX retransmission timer may be the same or may be different;
DRX inactive duration is greater than or equal to a third value; and
DRX active duration is less than or equal to a fourth value.

In an implementation, the first value, the second value, the third value, and the fourth value may be related to a time required by a first terminal device to obtain a CGI.

For example, the first value may be greater than a length of a current DRX cycle. A DRX inactive time may be increased to some extent by increasing the length of the DRX cycle, so that it can be ensured to some extent that a terminal device with a low processing capability has sufficient time to obtain a CGI.

For another example, the second value may be less than a length of the DRX inactivity timer, the DRX on duration timer, or the DRX retransmission timer in the current DRX cycle. The DRX inactive time may be increased by reducing the length of the DRX inactivity timer, the DRX on duration timer, or the DRX retransmission timer, so that it can be ensured to some extent that a terminal device with a low processing capability has sufficient time to obtain a CGI.

For another example, the third value may be greater than current DRX inactive duration. In an example, the third value may be greater than or equal to duration required by the first terminal device to obtain the CGI. By increasing the DRX inactive time, it can be ensured to some extent that a terminal device with a low processing capability has sufficient time to obtain a CGI.

For another example, the fourth value may be less than active duration in the current DRX cycle. The DRX inactive time may be increased by reducing the DRX active duration, so that it can be ensured to some extent that a terminal device with a low processing capability has sufficient time to obtain a CGI.

In an implementation, the first value, the second value, the third value, or the fourth value may be defined in a protocol.

In another implementation, the first value, the second value, the third value, or the fourth value may alternatively be configured by the network device. For example, the terminal device may report, to the access network device, capability information related to obtaining the CGI. The access network device may estimate, based on the capability information reported by the terminal device, duration required by the terminal device to obtain the CGI, and determine the first value, the second value, the third value, or the fourth value based on the duration.

In another implementation, the first value, the second value, the third value, or the fourth value may alternatively be reported by the terminal device.

S 1002. The terminal device performs reception and/or sending based on the configuration information.

In an implementation, the terminal device may obtain the CGI within the DRX inactive time.

In this embodiment of this application, the DRX inactive duration can be increased by restricting the DRX configuration. Therefore, it can be ensured to some extent that a terminal device with a low processing capability has sufficient time to obtain a CGI, so that the CGI can be reported.

To resolve this problem, an embodiment of this application provides a communication method. In the method, a quantity of times that a network device schedules a terminal device to perform new transmission and/or retransmission is restricted, to ensure, as much as possible, that a terminal device with a low processing capability has sufficient time to obtain a CGI, so that the CGI can be reported. Refer to FIG. 11. The method includes the following steps.

S1101. An access network device determines scheduling information, where the scheduling information is used to schedule a first terminal device to transmit data. "Transmission" may refer to sending and/or receiving.

S1102. The access network device sends the scheduling information to the terminal device. Correspondingly, the terminal device receives the scheduling information sent by the access network device.

A quantity of times that the terminal device is scheduled to transmit data in a first time unit is less than or equal to a fifth value. In an implementation, the fifth value is related to a time required by the first terminal device to obtain a CGI.

In an example for description, the quantity of times that the network device schedules the terminal device to transmit data may include: the network device schedules the terminal device to perform new transmission and/or the network device schedules the terminal device to perform retransmission. The new transmission and the retransmission may correspond to different fifth values, or certainly may correspond to a same fifth value.

A manner of determining the fifth value is similar to a manner of determining the first value, the second value, the third value, or the fourth value in the method in FIG. 10. For details, refer to related descriptions in FIG. 10. Details are not described herein again.

In this embodiment of this application, DRX active duration of the terminal device can be indirectly reduced by restricting the quantity of times that the network device schedules the terminal device to transmit data. Therefore, DRX inactive duration can be increased, and it can be further ensured to some extent that a terminal device with a low processing capability has sufficient time to obtain a CGI, so that the CGI can be reported. Therefore, after obtaining the CGI, the access network device can perform network planning or network optimization. This helps improve communication performance of the terminal device.

In an example for description, the methods in FIG. 10 and FIG. 11 may be used for inter-RAT CGI reporting. To be specific, when the network configures the terminal device to perform inter-RAT CGI reporting, the methods in FIG. 10 and FIG. 11 may be implemented. Certainly, the methods in FIG. 10 and FIG. 11 may also be implemented in other scenarios. This is not specifically limited herein.

It should be noted that each of the methods in FIG. 4 to FIG. 11 may be separately implemented as one solution. Alternatively, some or all of the methods in FIG. 4 to FIG. 11 are implemented in combination as one solution.

In addition, currently, the access network device may configure the terminal device to perform RLM measurement and/or BFD measurement to monitor quality of a communication link and/or a communication beam, to ensure communication performance. When a specific relaxation criterion is met, the terminal device may relax the RLM measurement and/or the BFD measurement. For example, the terminal device performs the RLM measurement and/or the BFD measurement in a long period. However, when the RLM measurement and/or the BFD measurement are/is relaxed, because the terminal device does not monitor quality of the communication link and/or beam in time, an RLF and/or a BF may occur on the terminal device. Therefore, how to avoid or reduce a failure caused by the relaxation of the RLM measurement and/or the BFD measurement by the terminal device is an urgent problem to be resolved.

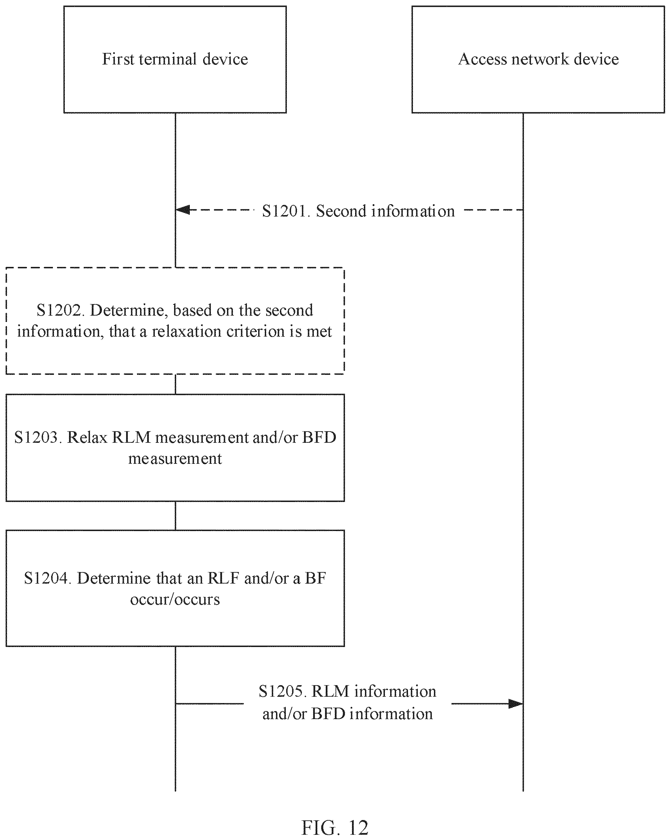

To resolve this problem, an embodiment of this application provides a communication method. In the method, when relaxing RLM measurement and/or BFD measurement, a terminal device reports RLF and/or BF information to an access network device, so that the access network device can adjust, based on a status of the terminal device, a policy for relaxing the RLM measurement and/or the BFD measurement by the terminal device, to reduce a failure probability of the terminal device during measurement relaxation as much as possible. Refer to FIG. 12. The method includes the following steps.

S1201. An access network device sends second information to a terminal device. Correspondingly, the terminal device receives the second information sent by the access network device.

The second information may be used to indicate whether the terminal device is allowed to apply a measurement relaxation mechanism, and the measurement relaxation mechanism is used to relax RLM measurement and/or BFD measurement.

Alternatively, the second information may be used to indicate a measurement relaxation criterion configuration. The measurement relaxation criterion configuration is used by the terminal device to determine whether RLM measurement and/or BFD measurement can be relaxed, and the configuration may include a quality threshold and/or a duration threshold of a reference signal.

S1202. The terminal device determines that a relaxation criterion is met.

In an implementation, the terminal device may determine an RLM/BFD measurement operation based on the second information sent by the access network device.

Steps S1201 and S1202 may be optional steps.

S1203. The terminal device relaxes the RLM measurement and/or the BFD measurement.

Specifically, the terminal device may relax the RLM measurement and/or the BFD measurement when the relaxation criterion is met. A specific manner of relaxing the RLM measurement and/or the BFD measurement may be: increasing, by the terminal device, a measurement period of the RLM measurement and/or the BFD measurement, increasing an indication period and/or a reporting period of the RLM measurement and/or the BFD measurement, reducing a quantity of reference signals of the RLM measurement and/or the BFD measurement, or the like.

S1204. The terminal device determines that an RLF and/or a BF occur/occurs.

S1205. The terminal device sends RLM information and/or BFD information to the access network device. Correspondingly, the access network device receives the RLM information and/or the BFD information sent by the terminal device.

The RLM information indicates that the RLF occurs when the terminal device relaxes the RLM measurement. The BFD information may be used to indicate that the BF occurs when the terminal device relaxes the BFD measurement.

In an implementation, the terminal device may indicate the RLM information and/or the BFD information to the access network device in a failure information procedure (failure information procedure), a secondary cell group (secondary cell group, SCG) failure information procedure (SCG failure information procedure), an RRC connection re-establishment procedure, or a beam failure recovery (Beam failure recovery) procedure.

In this embodiment of this application, when the terminal device relaxes the RLM measurement and/or the BFD measurement, the terminal device reports the RLM information and/or the BFD information to the access network device when the RLF and/or the BF occur/occurs, so that the access network device can adjust, based on a status of the terminal device, a policy for relaxing the RLM measurement and/or the BFD measurement by the terminal device. Therefore, a failure probability of the terminal device during measurement relaxation is reduced as much as possible, and this helps improve communication performance of the terminal device.

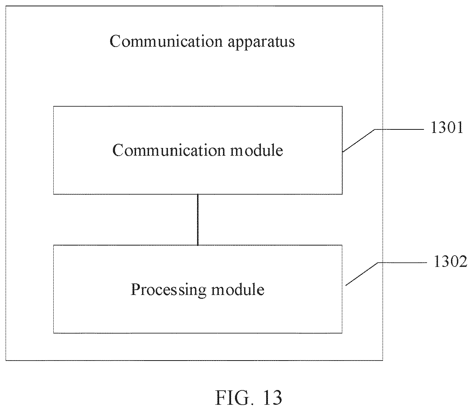

Based on a same concept as the method embodiments, an embodiment of this application provides a communication apparatus. A structure of the communication apparatus may be shown in FIG. 13. The communication apparatus includes a communication module 1301 and a processing module 1302.

In an implementation, the communication apparatus may be specifically configured to implement the method performed by the first terminal device in the embodiment in FIG. 4. The apparatus may be the first terminal device itself, or may be a chip or a chip set in the first terminal device, or a part of a chip that is configured to perform a related method function. The communication module 1301 receives a first message from a first access network device, where the first message indicates to hand over the first terminal device to a first cell, and the first cell corresponds to a second access network device. The processing module 1302 determines a capability of the first cell based on the first message, where the capability of the first cell is whether the first cell supports serving a first type of terminal device, the first terminal device belongs to the first type of terminal device, and the first type of terminal device is a terminal device with a reduced capability; and determines, based on the capability of the first cell, whether to access the first cell.

Optionally, when determining the capability of the first cell based on the first message, the processing module 1302 is specifically configured to: if the first message carries first information, determine that the first cell supports serving the first type of terminal device; or if the first message does not carry first information, determine that the first cell does not support serving the first type of terminal device, where the first information indicates that the first cell supports serving the first type of terminal device.

Optionally, when determining, based on the capability of the first cell, whether to access the first cell, the processing module 1302 is specifically configured to: if the first cell supports serving the first type of terminal device, access the first cell; or if the first cell does not support serving the first type of terminal device, perform an RRC connection re-establishment procedure, or establish an RRC connection to a second cell, where an access network device corresponding to the second cell is different from the access network device corresponding to the first cell, or enter an RRC idle state.

In an implementation, the communication apparatus may be specifically configured to implement the method performed by the second access network device in the embodiment in FIG. 4 or FIG. 7. The apparatus may be the second access network device itself, or may be a chip or a chip set in the second access network device, or a part of a chip that is configured to perform a related method function. The communication module 1301 is configured to communicate with a first access network device. The processing module 1302 is configured to: receive a handover request message from the first access network device by using the communication module 1301; and send a handover response message to the first access network device by using the communication module 1301, where if the second access network device supports serving a first type of terminal device, the handover response message carries first information, or if the second access network device does not support serving a first type of terminal device, the handover response message does not carry first information, where the first information indicates that the second access network device supports serving the first type of terminal device.

Optionally, the processing module 1302 is further configured to: before sending the first information to the first access network device by using the communication module 1301, determine that a first terminal device is the first type of terminal device; or before sending the first information to the first access network device by using the communication module 1301, determine that a first terminal device is the first type of terminal device and that a radio access technology standard supported by the first access network device is LTE.

Optionally, before sending the first information to the first access network device by using the communication module 1301, the processing module 1302 is further configured to determine that a first terminal device is the first type of terminal device and that a radio access technology standard supported by the first access network device is higher than LTE.

In an implementation, the communication apparatus may be specifically configured to implement the method performed by the first terminal device in the embodiment in FIG. 5. The apparatus may be the first terminal device itself, or may be a chip or a chip set in the first terminal device, or a part of a chip that is configured to perform a related method function. The communication module 1301 is configured to receive system information of a first cell. The processing module 1302 is configured to: determine, based on the system information of the first cell, that the first cell does not support serving a first type of terminal device, where the first terminal device belongs to the first type of terminal device; and perform an RRC connection re-establishment procedure, or establish an RRC connection to a second cell, where the first cell and the second cell correspond to different access network devices, or enter an idle state.

Optionally, before determining, based on the system information of the first cell, that the first message does not support serving the first type of terminal device, the processing module 1302 is further configured to be handed over from a third cell to the first cell, where the third cell and the first cell correspond to different access network devices.

Optionally, when determining, based on the system information of the first cell, that the first message does not support serving the first type of terminal device, the processing module 1302 is specifically configured to: if the system information includes first information, determine that the first cell supports serving the first type of terminal device; or if the system information does not include first information, determine that the first cell does not support serving the first type of terminal device, where the first information is information specific to the first type of terminal device, for example, information specific to the first type of terminal device and broadcast by a target access network device based on system information.

In an implementation, the communication apparatus may be specifically configured to implement the method performed by the first terminal device in the embodiment in FIG. 6. The apparatus may be the network device itself, or may be a chip or a chip set in the network device, or a part of a chip that is configured to perform a related method function. The communication module 1301 is configured to receive measurement configuration information, where the measurement configuration information indicates to measure a first cell. The processing module 1302 is configured to determine a measurement operation based on a capability of the first cell, where the capability of the first cell is whether the first cell supports serving a first type of terminal device, and the first terminal device belongs to the first type of terminal device.

Optionally, when determining the measurement operation based on the capability of the first cell, the processing module 1302 is specifically configured to: determine that the first cell supports serving the first type of terminal device; and measure the first cell.

Optionally, when determining the measurement operation based on the capability of the first cell, the processing module 1302 is specifically configured to: determine that the first cell does not support serving the first type of terminal device; and skip measuring the first cell, and/or skip reporting a measurement result of the first cell.

Optionally, the processing module 1302 is further configured to: determine the capability of the first cell based on stored information, where the stored information includes: information about a cell that supports serving the first type of terminal device, and/or information about a cell that does not support serving the first type of terminal device.

Optionally, the processing module 1302 is further configured to determine the capability of the first cell based on system information of the first cell.

Optionally, when determining the capability of the first cell based on the system information of the first cell, the processing module 1302 is specifically configured to: if the system information includes first information, determine that the first cell supports serving the first type of terminal device; or if the system information does not include first information, determine that the first cell does not support serving the first type of terminal device, where the first information is information specific to the first type of terminal device, for example, information specific to the first type of terminal device and broadcast by a target access network device based on system information.

In an implementation, the communication apparatus may be specifically configured to implement the method performed by the first access network device in the embodiment in FIG. 7. The apparatus may be the first access network device itself, or may be a chip or a chip set in the first access network device, or a part of a chip that is configured to perform a related method function. The communication module 1301 is configured to: send a handover request message to a second access network device, where a first terminal device belongs to a first type of terminal device; and receive a handover response message from the second access network device. The processing module 1302 is configured to: determine a capability of the second access network device based on the handover response message, where the capability of the second access network device is whether the second access network device supports serving the first type of terminal device; and determine, based on the capability of the second access network device, whether to hand over the first terminal device to the second access network device.

Optionally, when determining the capability of the second access network device, the processing module 1302 is specifically configured to: if the handover response message carries first information, determine that the second access network device supports serving the first type of terminal device; or if the handover response message does not carry first information, determine that the second access network device does not support serving the first type of terminal device, where the first information indicates that the second access network device supports serving the first type of terminal device.

Optionally, when determining, based on the capability of the second access network device, whether to hand over the first terminal device to the second access network device, the processing module 1302 is specifically configured to: if the second access network device supports serving the first type of terminal device, hand over the first terminal device to the second access network device; or if the second access network device does not support serving the first type of terminal device, select a third access network device as a target access network device.

In an implementation, the communication apparatus may be specifically configured to implement the method performed by the core network device in the embodiment in FIG. 8 or the second core network device in the embodiment in FIG. 9. The apparatus may be the core network device itself, or may be a chip or a chip set in the core network device, or a part of a chip that is configured to perform a related method function. The communication module 1301 is configured to receive a handover request message from a first access network device, where the handover request message is used to request to hand over a first terminal device to a second access network device, and the first terminal device belongs to a first type of terminal device; and the processing module 1302 is configured to determine, based on a capability of the second access network device, whether to perform the handover, where the capability of the second access network device is whether the second access network device supports serving the first type of terminal device.

Optionally, when determining, based on the capability of the second access network device, whether to perform the handover, the processing module 1302 is specifically configured to: if the second access network device does not support serving the first type of terminal device, send a notification message to the first access network device, where the notification message is used to notify that the handover fails, or that the handover is not performed, or that the handover is suspended/stopped, or that the handover is rejected; or if the second access network device supports serving the first type of terminal device, send a handover request message to the second access network device. Based on the foregoing design, the terminal device can be prevented from being handed over to a cell that does not support this type of terminal device. Therefore, mobility performance of the terminal device can be enhanced, and service performance of the terminal device can be improved.

In an implementation, the communication apparatus may be specifically configured to implement the method performed by the terminal device in the embodiment in FIG. 10. The apparatus may be the terminal device itself, or may be a chip or a chip set in the terminal device, or a part of a chip that is configured to perform a related method function. The communication module 1301 is configured to communicate with an access network device. The processing module 1302 is configured to: receive configuration information from the access network device by using the communication module 1301, and perform reception and/or sending based on the configuration information by using the communication module 1301, where the configuration information is used to configure a discontinuous reception DRX mechanism, and the configuration information meets at least one of the following: a configured DRX cycle is greater than or equal to a first value; a configured DRX inactivity timer, DRX on duration timer, or DRX retransmission timer is less than or equal to a second value; configured DRX inactive duration is greater than or equal to a third value; and configured DRX active duration is less than or equal to a fourth value, where the first value, the second value, the third value, and the fourth value are related to a time required by the first terminal device to obtain a CGI.

In an implementation, the communication apparatus may be specifically configured to implement the method performed by the access network device in the embodiment in FIG. 10. The apparatus may be the access network device itself, or may be a chip or a chip set in the access network device, or a part of a chip that is configured to perform a related method function. The processing module 1302 is configured to determine configuration information, where the configuration information is used to configure DRX. The communication module 1301 is configured to send the configuration information to a first terminal device, where the configuration information meets at least one of the following: a configured DRX cycle is greater than or equal to a first value; a configured DRX inactivity timer, DRX on duration timer, or DRX retransmission timer is less than or equal to a second value; configured DRX inactive duration is greater than or equal to a third value; and configured DRX active duration is less than or equal to a fourth value, where the first value, the second value, the third value, and the fourth value are related to a time required by the first terminal device to obtain a CGI.

In an implementation, the communication apparatus may be specifically configured to implement the method performed by the access network device in the embodiment in FIG. 11. The apparatus may be the access network device itself, or may be a chip or a chip set in the access network device, or a part of a chip that is configured to perform a related method function. The processing module 1302 is configured to determine scheduling information, where the scheduling information is used to schedule a first terminal device to receive and/or send data. The communication module 1301 is configured to send the scheduling information to the first terminal device, where a quantity of times that the terminal device is scheduled to receive and/or send data in a first time unit is less than or equal to a fifth value, and the fifth value is related to a time required by the first terminal device to obtain a CGI.

In an implementation, the communication apparatus may be specifically configured to implement the method performed by the terminal device in the embodiment in FIG. 12. The apparatus may be the terminal device itself, or may be a chip or a chip set in the terminal device, or a part of a chip that is configured to perform a related method function. The processing module 1302 is configured to: relax RLM measurement and/or BFD measurement; and determine that an RLF and/or a BF occur/occurs. The communication module 1301 is configured to send RLM information and/or BFD information to an access network device.

Optionally, when relaxing the RLM measurement and/or the BFD measurement, the processing module 1302 is specifically configured to: increase a measurement period of the RLM measurement and/or the BFD measurement, increase an indication period and/or a reporting period of the RLM measurement and/or the BFD measurement, or reduce a quantity of reference signals of the RLM measurement and/or the BFD measurement.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in this embodiment of this application, further refer to related descriptions in the method embodiments.

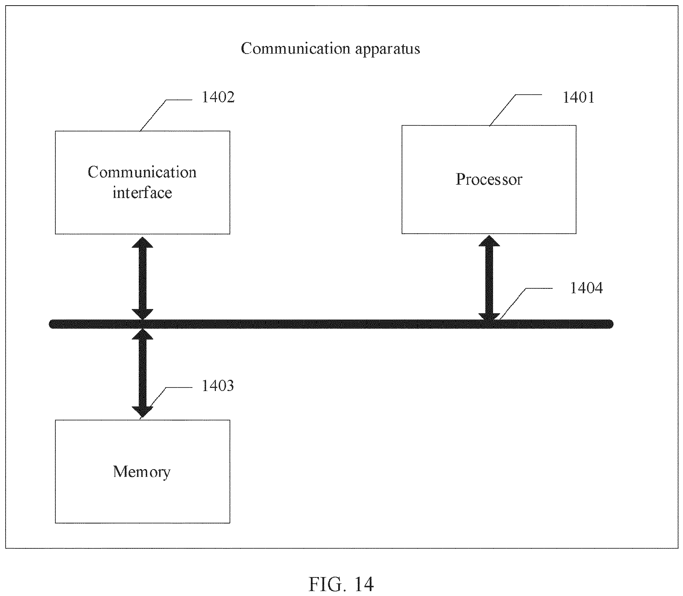

In a possible manner, the communication apparatus may be shown in FIG. 14. The apparatus may be a communication device or a chip in a communication device. The communication device may be the terminal device in the foregoing embodiment or the network device in the foregoing embodiment. The apparatus includes a processor 1401 and a communication interface 1402, and may further include a memory 1403. The processing module 1302 may be the processor 1401. The communication module 1301 may be the communication interface 1402.

The processor 1401 may be a CPU, a digital processing unit, or the like. The communication interface 1402 may be a transceiver, an interface circuit such as a transceiver circuit, a transceiver chip, or the like. The apparatus further includes the memory 1403, configured to store a program executed by the processor 1401. The memory 1403 may be a nonvolatile memory such as a hard disk drive (hard disk drive, HDD) or a solid-state drive (solid-state drive, SSD), or may be a volatile memory (volatile memory) such as a random access memory (random-access memory, RAM). The memory 1403 is any other medium that can carry or store expected program code in a form of an instruction or a data structure and that can be accessed by a computer, but is not limited thereto.

The processor 1401 is configured to execute the program code stored in the memory 1403, and is specifically configured to perform an action of the processing module 1302. Details are not described herein again in this application. The communication interface 1402 is specifically configured to perform an action of the communication module 1301. Details are not described herein again in this application.

This embodiment of this application does not limit a specific connection medium between the communication interface 1402, the processor 1401, and the memory 1403. In this embodiment of this application, in FIG. 14, the memory 1403, the processor 1401, and the communication interface 1402 are connected through a bus 1404. The bus is represented by using a bold line in FIG. 14, and a connection manner between other parts is merely used as an example for description, and does not constitute a limitation. The bus may be classified into an address bus, a data bus, a control bus, and the like. For ease of representation, only one bold line is used to represent the bus in FIG. 14, but this does not mean that there is only one bus or only one type of bus.

An embodiment of this application further provides a computer-readable storage medium, configured to store computer software instructions that need to be executed by the foregoing processor. The computer software instructions include a program that needs to be executed by the foregoing processor.

An embodiment of this application further provides a communication system, including a communication apparatus configured to implement functions of the first terminal device in the embodiment in FIG. 4, a communication apparatus configured to implement functions of the first access network device in the embodiment in FIG. 4, and a communication apparatus configured to implement functions of the second access network device in the embodiment in FIG. 4.

An embodiment of this application further provides a communication system, including a communication apparatus configured to implement functions of the first terminal device in the embodiment in FIG. 5 and a communication apparatus configured to implement functions of the second access network device in the embodiment in FIG. 5.

An embodiment of this appli cation further provides a communication system, including a communication apparatus configured to implement functions of the first terminal device in the embodiment in FIG. 6 and a communication apparatus configured to implement functions of the first access network device in the embodiment in FIG. 6.

An embodiment of this application further provides a communication system, including a communication apparatus configured to implement functions of the first access network device in the embodiment in FIG. 7 and a communication apparatus configured to implement functions of the second access network device in the embodiment in FIG. 7.

An embodiment of this application further provides a communication system, including a communication apparatus configured to implement functions of the first access network device in the embodiment in FIG. 8 and a communication apparatus configured to implement functions of the core network device in the embodiment in FIG. 8.

An embodiment of this application further provides a communication system, including a communication apparatus configured to implement functions of the first access network device in the embodiment in FIG. 9 and a communication apparatus configured to implement functions of the second core network device in the embodiment in FIG. 9.

An embodiment of this application further provides a communication system, including a communication apparatus configured to implement functions of the terminal device in the embodiment in FIG. 10 and a communication apparatus configured to implement functions of the access network device in the embodiment in FIG. 10.

An embodiment of this application further provi des a communication system, including a communication apparatus configured to implement functions of the terminal device in the embodiment in FIG. 11 and a communication apparatus configured to implement functions of the access network device in the embodiment in FIG. 11.

An embodiment of this application further provides a communication system, including a communication apparatus configured to implement functions of the terminal device in the embodiment in FIG. 12 and a communication apparatus configured to implement functions of the access network device in the embodiment in FIG. 12.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or block diagrams of the methods, the devices (systems), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can instruct a computer or another programmable data processing device to operate in a specific manner, so that the instructions stored in the computer-readable memory generate an artifact that includes an instruction apparatus. The instruction apparatus implements a specific function in one or more processes in the flowcharts and/or in one or more blocks in the block diagrams.

Alternatively, these computer program instructions may be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

## Claims

1. A communication method, wherein the method is applied to a first terminal device, and the method comprises:
receiving a first message from a first access network device, wherein the first message indicates to hand over the first terminal device to a first cell, and the first cell corresponds to a second access network device;
determining a capability of the first cell based on the first message, wherein the capability of the first cell is whether the first cell supports serving a first type of terminal device, the first terminal device belongs to the first type of terminal device, and the first type of terminal device is a terminal device with a reduced capability; and
determining, based on the capability of the first cell, whether to access the first cell.

2. The method according to claim 1, wherein the determining a capability of the first cell based on the first message comprises:
if the first message carries first information, determining that the first cell supports serving the first type of terminal device; or
if the first message does not carry first information, determining that the first cell does not support serving the first type of terminal device, wherein
the first information indicates that the first cell supports serving the first type of terminal device.

3. The method according to claim 2, wherein the first information comprises at least one of the following:
an intra-frequency reselection indication corresponding to the first type of terminal device;
a cell bar indication corresponding to the first type of terminal device; and
resource configuration information corresponding to the first type of terminal device.

4. The method according to any one of claims 1 to 3, wherein the determining, based on the capability of the first cell, whether to access the first cell comprises:
if the first cell supports serving the first type of terminal device, accessing the first cell; or
if the first cell does not support serving the first type of terminal device, performing a radio resource control RRC connection re-establishment procedure, or establishing an RRC connection to a second cell, wherein an access network device corresponding to the second cell is different from the access network device corresponding to the first cell, or entering an RRC idle state.

5. A communication method, wherein the method is applicable to a second access network device, and the method comprises:
receiving a handover request message from a first access network device; and
sending a handover response message to the first access network device, wherein
if the second access network device supports serving a first type of terminal device, the handover response message carries first information, or if the second access network device does not support serving a first type of terminal device, the handover response message does not carry first information, wherein the first information indicates that the second access network device supports serving the first type of terminal device.

6. The method according to claim 5, wherein the first information comprises at least one of the following:
an intra-frequency reselection indication corresponding to the first type of terminal device;
a cell bar indication corresponding to the first type of terminal device; and
resource configuration information corresponding to the first type of terminal device.

7. The method according to claim 5 or 6, wherein before sending the first information to the first access network device, the method further comprises:
determining that a first terminal device is the first type of terminal device; or
determining that a first terminal device is the first type of terminal device and that a radio access technology standard supported by the first access network device is higher than long term evolution LTE.

8. A communication method, wherein the method is applied to a first terminal device, and the method comprises:
determining, based on system information of a first cell, that the first cell does not support serving a first type of terminal device, wherein the first terminal device belongs to the first type of terminal device; and
performing a radio resource control RRC connection re-establishment procedure, or establishing an RRC connection to a second cell, wherein the first cell and the second cell correspond to different access network devices, or entering an idle state.

9. The method according to claim 8, wherein before the determining, based on system information of a first cell, that the first cell does not support serving a first type of terminal device, the method further comprises:
being handed over from a third cell to the first cell, wherein the third cell and the first cell correspond to different access network devices.

10. The method according to claim 8 or 9, wherein the determining, based on system information of a first cell, that the first cell does not support serving a first type of terminal device comprises:
if the system information comprises first information, determining that the first cell supports serving the first type of terminal device, wherein the first information is information specific to the first type of terminal device; or
if the system information does not comprise first information, determining that the first cell does not support serving the first type of terminal device.

11. The method according to claim 10, wherein the information specific to the first type of terminal device comprises at least one of the following:
an intra-frequency reselection indication corresponding to the first type of terminal device;
a cell bar indication corresponding to the first type of terminal device; and
resource configuration information corresponding to the first type of terminal device.

12. The method according to any one of claims 8 to 11, wherein the first type of terminal device is a terminal device with a reduced capability.

13. A communication method, wherein the method is applied to a first terminal device, and the method comprises:
receiving measurement configuration information, wherein the measurement configuration information indicates to measure a first cell; and
determining a measurement operation based on a capability of the first cell, wherein the capability of the first cell is whether the first cell supports serving a first type of terminal device, and the first terminal device belongs to the first type of terminal device.

14. The method according to claim 13, wherein the first type of terminal device is a terminal device with a reduced capability.

15. The method according to claim 13 or 14, wherein the determining a measurement operation based on a capability of the first cell comprises:
determining that the first cell supports serving the first type of terminal device; and
measuring the first cell.

16. The method according to claim 13 or 14, wherein the determining a measurement operation based on a capability of the first cell comprises:
determining that the first cell does not support serving the first type of terminal device; and
skipping measuring the first cell, and/or skipping reporting a measurement result of the first cell.

17. The method according to any one of claims 13 to 16, wherein the method further comprises:
determining the capability of the first cell based on stored information, wherein the stored information comprises: information about a cell that supports serving the first type of terminal device, and/or information about a cell that does not support serving the first type of terminal device.

18. The method according to any one of claims 13 to 17, wherein the method further comprises:
determining the capability of the first cell based on system information of the first cell.

19. The method according to claim 18, wherein the determining the capability of the first cell based on system information of the first cell comprises:
if the system information comprises first information, determining that the first cell supports serving the first type of terminal device, wherein the first information is information specific to the first type of terminal device; or
if the system information does not comprise first information, determining that the first cell does not support serving the first type of terminal device.

20. The method according to claim 19, wherein the information specific to the first type of terminal device comprises at least one of the following:
an intra-frequency reselection indication corresponding to the first type of terminal device;
a cell bar indication corresponding to the first type of terminal device; and
resource configuration information corresponding to the first type of terminal device.

21. A communication method, wherein the method is applied to a first access network device, and the method comprises:
sending a handover request message to a second access network device, wherein a first terminal device belongs to a first type of terminal device;
receiving a handover response message from the second access network device;
determining a capability of the second access network device based on the handover response message, wherein the capability of the second access network device is whether the second access network device supports serving the first type of terminal device; and
determining, based on the capability of the second access network device, whether to hand over the first terminal device to the second access network device.

22. The method according to claim 21, wherein the first type of terminal device is a terminal device with a reduced capability.

23. The method according to claim 21 or 22, wherein the determining a capability of the second access network device based on the handover response message comprises:
if the handover response message carries first information, determining that the second access network device supports serving the first type of terminal device, wherein the first information is information specific to the first type of terminal device; or
if the handover response message does not carry first information, determining that the second access network device does not support serving the first type of terminal device.

24. The method according to claim 23, wherein the information specific to the first type of terminal device comprises at least one of the following:
an intra-frequency reselection indication corresponding to the first type of terminal device;
a cell bar indication corresponding to the first type of terminal device; and
resource configuration information corresponding to the first type of terminal device.

25. The method according to any one of claims 21 to 24, wherein the determining, based on the capability of the second access network device, whether to hand over the first terminal device to the second access network device comprises:
if the second access network device supports serving the first type of terminal device, handing over the first terminal device to the second access network device; or
if the second access network device does not support serving the first type of terminal device, selecting a third access network device as a target access network device.

26. A communication method, wherein the method is applied to a core network device, and the method comprises:
receiving a handover request message from a first access network device, wherein the handover request message is used to request to hand over a first terminal device to a second access network device, and the first terminal device belongs to a first type of terminal device; and
determining, based on a capability of the second access network device, whether to perform the handover, wherein the capability of the second access network device is whether the second access network device supports serving the first type of terminal device.

27. The method according to claim 26, wherein if the first access network device and the second access network device are connected to different core network devices, the receiving a handover request message from a first access network device comprises:
receiving the handover request message forwarded by a core network device connected to the first access network device.

28. The method according to claim 26 or 27, wherein the determining, based on a capability of the second access network device, whether to perform the handover comprises:
if the second access network device does not support serving the first type of terminal device, sending a notification message to the first access network device, wherein the notification message is used to notify that the handover fails, or that the handover is not performed, or that the handover is suspended/stopped, or that the handover is rejected; or
if the second access network device supports serving the first type of terminal device, sending a handover request message to the second access network device.

29. The method according to claim 28, wherein the notification message carries a first cause value, and the first cause value indicates that a cause of the handover failure is that the second access network device does not support serving the first type of terminal device.

30. A communication method, wherein the method is applied to a first terminal device, and the method comprises:
receiving configuration information from an access network device, wherein the configuration information is used to configure discontinuous reception DRX; and
performing downlink reception based on the configuration information, wherein
the configuration information meets at least one of the following:
a configured DRX cycle is greater than or equal to a first value;
a configured DRX inactivity timer, DRX on duration timer, or DRX retransmission timer is less than or equal to a second value;
configured DRX inactive duration is greater than or equal to a third value; and
configured DRX active duration is less than or equal to a fourth value, wherein
the first value, the second value, the third value, and the fourth value are related to a time required by the first terminal device to obtain a cell global identifier CGI.

31. The method according to claim 30, wherein the DRX cycle comprises a long DRX cycle and/or a short DRX cycle.

32. A communication method, wherein the method is applied to an access network device, and the method comprises:
determining configuration information, wherein the configuration information is used to configure discontinuous reception DRX; and
sending the configuration information to a first terminal device, wherein
the configuration information meets at least one of the following:
a configured DRX cycle is greater than or equal to a first value;
a configured DRX inactivity timer, DRX on duration timer, or DRX retransmission timer is less than or equal to a second value;
configured DRX inactive duration is greater than or equal to a third value; and
configured DRX active duration is less than or equal to a fourth value, wherein
the first value, the second value, the third value, and the fourth value are related to a time required by the first terminal device to obtain a cell global identifier CGI.

33. The method according to claim 32, wherein the DRX cycle comprises a long DRX cycle and/or a short DRX cycle.

34. A communication method, wherein the method is applied to an access network device, and the method comprises:
determining scheduling information, wherein the scheduling information is used to schedule a first terminal device to receive and/or send data; and
sending the scheduling information to the first terminal device, wherein
a quantity of times that the terminal device is scheduled to receive and/or send data in a first time unit is less than or equal to a fifth value, and the fifth value is related to a time required by the first terminal device to obtain a cell global identifier CGI.

35. A communication apparatus, wherein the apparatus is applied to a first terminal device, and the apparatus comprises:
a communication module, configured to receive a first message from a first access network device, wherein the first message indicates to hand over the first terminal device to a first cell, and the first cell corresponds to a second access network device; and
a processing module, configured to: determine a capability of the first cell based on the first message, wherein the capability of the first cell is whether the first cell supports serving a first type of terminal device, the first terminal device belongs to the first type of terminal device, and the first type of terminal device is a terminal device with a reduced capability; and
determine, based on the capability of the first cell, whether to access the first cell.

36. The apparatus according to claim 35, wherein when determining the capability of the first cell based on the first message, the processing module is specifically configured to:
if the first message carries first information, determine that the first cell supports serving the first type of terminal device; or
if the first message does not carry first information, determine that the first cell does not support serving the first type of terminal device, wherein
the first information indicates that the first cell supports serving the first type of terminal device.

37. The apparatus according to claim 36, wherein the first information comprises at least one of the following:
an intra-frequency reselection indication corresponding to the first type of terminal device;
a cell bar indication corresponding to the first type of terminal device; and
resource configuration information corresponding to the first type of terminal device.

38. The apparatus according to any one of claims 35 to 37, wherein when determining, based on the capability of the first cell, whether to access the first cell, the processing module is specifically configured to:
if the first cell supports serving the first type of terminal device, access the first cell; or
if the first cell does not support serving the first type of terminal device, perform a radio resource control RRC connection re-establishment procedure, or establish an RRC connection to a second cell, wherein an access network device corresponding to the second cell is different from the access network device corresponding to the first cell, or enter an RRC idle state.

39. A communication apparatus, wherein the apparatus is applicable to a second access network device, and the apparatus comprises:
a communication module, configured to communicate with a first access network device; and
a processing module, configured to:
receive a handover request message from the first access network device by using the communication module; and
send a handover response message to the first access network device by using the communication module, wherein
if the second access network device supports serving a first type of terminal device, the handover response message carries first information, or if the second access network device does not support serving a first type of terminal device, the handover response message does not carry first information, wherein the first information indicates that the second access network device supports serving the first type of terminal device.

40. The apparatus according to claim 39, wherein the first information comprises at least one of the following:
an intra-frequency reselection indication corresponding to the first type of terminal device;
a cell bar indication corresponding to the first type of terminal device; and
resource configuration information corresponding to the first type of terminal device.

41. The apparatus according to claim 39 or 40, wherein the processing module is further configured to:
before sending the first information to the first access network device by using the communication module, determine that a first terminal device is the first type of terminal device; or
before sending the first information to the first access network device by using the communication module, determine that a first terminal device is the first type of terminal device and that a radio access technology standard supported by the first access network device is higher than long term evolution LTE.

42. A communication apparatus, wherein the apparatus is applied to a first terminal device, and the apparatus comprises:
a communication module, configured to receive system information of a first cell; and
a processing module, configured to: determine, based on the system information of the first cell, that the first cell does not support serving a first type of terminal device, wherein the first terminal device belongs to the first type of terminal device; and
perform a radio resource control RRC connection re-establishment procedure, or establish an RRC connection to a second cell, wherein the first cell and the second cell correspond to different access network devices, or enter an idle state.

43. The apparatus according to claim 42, wherein the processing module is further configured to:
before determining, based on the system information of the first cell, that the first cell does not support serving the first type of terminal device, be handed over from a third cell to the first cell, wherein the third cell and the first cell correspond to different access network devices.

44. The apparatus according to claim 42 or 43, wherein when determining, based on the system information of the first cell, that the first cell does not support serving the first type of terminal device, the processing module is specifically configured to:
if the system information comprises first information, determine that the first cell supports serving the first type of terminal device, wherein the first information is information specific to the first type of terminal device; or
if the system information does not comprise first information, determine that the first cell does not support serving the first type of terminal device.

45. The apparatus according to claim 44, wherein the information specific to the first type of terminal device comprises at least one of the following:
an intra-frequency reselection indication corresponding to the first type of terminal device;
a cell bar indication corresponding to the first type of terminal device; and
resource configuration information corresponding to the first type of terminal device.

46. The apparatus according to any one of claims 42 to 45, wherein the first type of terminal device is a terminal device with a reduced capability.

47. A communication apparatus, wherein the apparatus is applied to a first terminal device, and the apparatus comprises:
a communication module, configured to receive measurement configuration information, wherein the measurement configuration information indicates to measure a first cell; and
a processing module, configured to determine a measurement operation based on a capability of the first cell, wherein the capability of the first cell is whether the first cell supports serving a first type of terminal device, and the first terminal device belongs to the first type of terminal device.

48. The apparatus according to claim 47, wherein the first type of terminal device is a terminal device with a reduced capability.

49. The apparatus according to claim 47 or 48, wherein the determining a measurement operation based on a capability of the first cell comprises:
determining that the first cell supports serving the first type of terminal device; and
measuring the first cell.

50. The apparatus according to claim 47 or 48, wherein the determining a measurement operation based on a capability of the first cell comprises:
determining that the first cell does not support serving the first type of terminal device; and
skipping measuring the first cell, and/or skipping reporting a measurement result of the first cell.

51. The apparatus according to any one of claims 47 to 50, wherein the apparatus further comprises:
determining the capability of the first cell based on stored information, wherein the stored information comprises: information about a cell that supports serving the first type of terminal device, and/or information about a cell that does not support serving the first type of terminal device.

52. The apparatus according to any one of claims 47 to 51, wherein the apparatus further comprises:
determining the capability of the first cell based on system information of the first cell.

53. The apparatus according to claim 52, wherein the determining the capability of the first cell based on system information of the first cell comprises:
if the system information comprises first information, determining that the first cell supports serving the first type of terminal device, wherein the first information is information specific to the first type of terminal device; or
if the system information does not comprise first information, determining that the first cell does not support serving the first type of terminal device.

54. The apparatus according to claim 53, wherein the information specific to the first type of terminal device comprises at least one of the following:
an intra-frequency reselection indication corresponding to the first type of terminal device;
a cell bar indication corresponding to the first type of terminal device; and
resource configuration information corresponding to the first type of terminal device.

55. A communication apparatus, wherein the apparatus is applied to a first access network device, and the apparatus comprises:
a communication module, configured to: send a handover request message to a second access network device, wherein a first terminal device belongs to a first type of terminal device; and
receive a handover response message from the second access network device; and
a processing module, configured to: determine a capability of the second access network device based on the handover response message, wherein the capability of the second access network device is whether the second access network device supports serving the first type of terminal device; and
determine, based on the capability of the second access network device, whether to hand over the first terminal device to the second access network device.

56. The apparatus according to claim 55, wherein the first type of terminal device is a terminal device with a reduced capability.

57. The apparatus according to claim 55 or 56, wherein when determining the capability of the second access network device based on the handover response message, the processing module is specifically configured to:
if the handover response message carries first information, determine that the second access network device supports serving the first type of terminal device, wherein the first information is information specific to the first type of terminal device; or
if the handover response message does not carry first information, determine that the second access network device does not support serving the first type of terminal device.

58. The apparatus according to claim 57, wherein the information specific to the first type of terminal device comprises at least one of the following:
an intra-frequency reselection indication corresponding to the first type of terminal device;
a cell bar indication corresponding to the first type of terminal device; and
resource configuration information corresponding to the first type of terminal device.

59. The apparatus according to any one of claims 55 to 58, wherein when determining, based on the capability of the second access network device, whether to hand over the first terminal device to the second access network device, the processing module is specifically configured to:
if the second access network device supports serving the first type of terminal device, hand over the first terminal device to the second access network device; or
if the second access network device does not support serving the first type of terminal device, select a third access network device as a target access network device.

60. A communication apparatus, wherein the apparatus is applied to a core network device, and the apparatus comprises:
a communication module, configured to receive a handover request message from a first access network device, wherein the handover request message is used to request to hand over a first terminal device to a second access network device, and the first terminal device belongs to a first type of terminal device; and
a processing module, configured to determine, based on a capability of the second access network device, whether to perform the handover, wherein the capability of the second access network device is whether the second access network device supports serving the first type of terminal device.

61. The apparatus according to claim 60, wherein if the first access network device and the second access network device are connected to different core network devices, when receiving the handover request message from the first access network device, the communication module is specifically configured to:
receive the handover request message forwarded by a core network device connected to the first access network device.

62. The apparatus according to claim 60 or 61, wherein when determining, based on the capability of the second access network device, whether to perform the handover, the processing module is specifically configured to:
if the second access network device does not support serving the first type of terminal device, send a notification message to the first access network device by using the communication module, wherein the notification message is used to notify that the handover fails, or that the handover is not performed, or that the handover is suspended/stopped, or that the handover is rejected; or
if the second access network device supports serving the first type of terminal device, send a handover request message to the second access network device by using the communication module.

63. The apparatus according to claim 62, wherein the notification message carries a first cause value, and the first cause value indicates that a cause of the handover failure is that the second access network device does not support serving the first type of terminal device.

64. A communication apparatus, wherein the apparatus is applied to a first terminal device, and the apparatus comprises:
a communication module, configured to communicate with an access network device; and
a processing module, configured to: receive configuration information from the access network device by using the communication module, wherein the configuration information is used to configure discontinuous reception DRX; and
perform reception and/or sending based on the configuration information by using the communication module, wherein
the configuration information meets at least one of the following:
a configured DRX cycle is greater than or equal to a first value;
a configured DRX inactivity timer, DRX on duration timer, or DRX retransmission timer is less than or equal to a second value;
configured DRX inactive duration is greater than or equal to a third value; and
configured DRX active duration is less than or equal to a fourth value, wherein
the first value, the second value, the third value, and the fourth value are related to a time required by the first terminal device to obtain a cell global identifier CGI.

65. The apparatus according to claim 64, wherein the DRX cycle comprises a long DRX cycle and/or a short DRX cycle.

66. A communication apparatus, wherein the apparatus is applied to an access network device, and the apparatus comprises:
a processing module, configured to determine configuration information, wherein the configuration information is used to configure discontinuous reception DRX; and
a communication module, configured to send the configuration information to a first terminal device, wherein
the configuration information meets at least one of the following:
a configured DRX cycle is greater than or equal to a first value;
a configured DRX inactivity timer, DRX on duration timer, or DRX retransmission timer is less than or equal to a second value;
configured DRX inactive duration is greater than or equal to a third value; and
configured DRX active duration is less than or equal to a fourth value, wherein
the first value, the second value, the third value, and the fourth value are related to a time required by the first terminal device to obtain a cell global identifier CGI.

67. The apparatus according to claim 66, wherein the DRX cycle comprises a long DRX cycle and/or a short DRX cycle.

68. A communication apparatus, wherein the apparatus is applied to an access network device, and the apparatus comprises:
a processing module, configured to determine scheduling information, wherein the scheduling information is used to schedule a first terminal device to receive and/or send data; and
a communication module, configured to send the scheduling information to the first terminal device, wherein
a quantity of times that the terminal device is scheduled to receive and/or send data in a first time unit is less than or equal to a fifth value, and the fifth value is related to a time required by the first terminal device to obtain a cell global identifier CGI.

69. A computer-readable storage medium, wherein the computer-readable storage medium is configured to store computer instructions, and when the computer instructions are run on a computer, the computer is enabled to perform the method according to any one of claims 1 to 34.

70. A computer program product, wherein when the computer program product is run on a device, the device is enabled to perform the method according to any one of claims 1 to 34.
